# EUROPEAN PATENT SPECIFICATION

(11) **EP 4 264 931 B1**
(45) Date of publication and mention of the grant of the patent: **07.10.2026**
(21) Application number: 21835261.5
(22) Date of filing: 09.12.2021
(51) Int. Cl.: H04M 9/08

(54) **APPARATUS AND METHOD FOR FILTERED-REFERENCE ACOUSTIC ECHO CANCELLATION**
VORRICHTUNG UND VERFAHREN ZUR AKUSTISCHEN ECHOKOMPENSATION MIT GEFILTERTER REFERENZ
APPAREIL ET PROCÉDÉ D'ANNULATION D'ÉCHO ACOUSTIQUE DE RÉFÉRENCE FILTRÉE

(30) Priority: 17.12.2020 EP 20215209
(43) Date of publication of application: 25.10.2023
(73) Proprietor: Fraunhofer-Gesellschaft zur Förderung der angewandten Forschung e.V., 80686 München (DE)
(72) Inventor: MABANDE, Edwin, 91058 Erlangen (DE); LUIS VALERO, Maria, 91058 Erlangen (DE); HABETS, Emanuel, 91058 Erlangen (DE); MILANO, Guendalina, 91058 Erlangen (DE); DEEPTH, Pilakeezhu, 91058 Erlangen (DE)
(74) Representative: Schairer, Oliver Michael
(86) International application number: PCT/EP2021/085055
(87) International publication number: WO 2022/128745

(56) References cited:
- EP-A1- 1 633 121
- US-A1- 2009 316 923
- US-A1- 2015 371 655

## Description

The present invention relates to acoustic echo cancellation, and, in particular, to an apparatus and method for filtered-reference acoustic echo cancellation.

In acoustic echo cancellation (AEC) [1], keeping computational complexity acceptable, while maintaining or only marginally degrading the cancellation performance is challenging.

There is a need for smart devices with immersive audio playback capabilities. Often, a virtualizer and a larger number of loudspeakers are provided with full-duplex communication functionality. With respect to acoustic echo control, this results in a performance degradation due to correlated loudspeaker signals (also known as the non-uniqueness problem), and in a higher computational complexity due to multichannel acoustic echo cancellation, as the number of AECs is in general equal to the number of loudspeakers times the number of microphones. Thus, the complexity increases quadratically with number of loudspeakers.

Complexity is a major issue as more and more devices with low-cost hardware become voice enabled. In the state-of-the-art, complexity reduction comes at cost of some performance degradation. However, higher sampling rates and lower delays are in particularly for communication applications would be very appreciated.

In the state-of-the-art, adaptive filters are employed for system identification [2], and the entire acoustic echo path (AEP) is estimated [3].

The problem even becomes significantly larger when multi-channel AEC (MC-AEC) is conducted [4]. Given such a setup, it is known that the computational complexity of the AEC module increases at least linearly, but commonly even quadratically with the number of loudspeakers [5]. Therefore, the practical implementation of such an algorithm may exceed the available computational resources.

Reducing the adaptive filter's length does not only reduce the computational complexity load, but also enhances the convergence rate of the adaptive algorithm. This helps mitigating the convergence rate constraints of MC-AEC for highly related loudspeaker signals [6].

By applying a nonlinear transformation to the multi-channel reference signals, the relation between them can be reduced [6]. This helps mitigating the non-uniqueness problem presented by MC-AEC for correlated loudspeaker signals [6] but also reduces the quality of the output signal.

US2009/0316923 A1 discloses a multichannel acoustic echo reduction system is described herein. The system includes an acoustic echo canceller (AEC) component having a fixed filter for each respective combination of loudspeaker and microphone signals and having an adaptive filter for each microphone signal. For each microphone signal, the AEC component modifies the microphone signal to reduce contributions from the outputs of the loudspeakers based at least in part on the respective adaptive filter associated with the microphone signal and the set of fixed filters associated with the respective microphone signal.

US 2015/0371655 A1 discloses a method for cancelling/reducing acoustic echoes in speech/audio signal enhancement processing comprises selecting a long-term filter based on an echo tail length detection or an echo reverberation time detection of an microphone input signal; a reference signal is pre-processed with the selected long-term filter; the pre-processed reference signal is used to excite an adaptive filter wherein the output of the adaptive filter forms a replica signal of acoustic echo and/or acoustic echo tail; the replica signal of acoustic echo and/or acoustic echo tail is subtracted from a microphone input signal to suppress the acoustic echo and/or acoustic echo tail in the microphone input signal. The echo tail length or the echo reverberation time is detected by analyzing and comparing the microphone input signal and a received signal which is sent to a speaker. A strong long-term filter is selected if the detected echo tail length or the detected echo reverberation time is long; a weak long-term filter is selected if the detected echo tail length or the detected echo reverberation time is not long.

EP 1 633 121 A1 discloses a system for speech signal processing with combined noise reduction and echo compensation, comprising an adaptive beamforming signal processing means configured to receive first speech signals and to derive adaptively beamformed signals from the first speech signals, an adaptive echo compensating means configured to reduce acoustic echoes in the adaptively beamformed signals and an adaptation means configured to simultaneously perform a combined adaptation of the adaptive beamforming means and the adaptive echo compensating means.

The object of the present invention is to provide improved concepts for acoustic echo cancellation.

The object of the present invention is solved by the subject-matter of the independent claims, which define the scope of protection. Particular embodiments are provided by the dependent claims.

Some embodiments relate to voice quality enhancement (VQE). Some embodiments provide a filtered-reference multichannel interference canceller.

Embodiments provide acoustic echo cancellation (AEC) concepts that employ filtered reference signals to reduce the computational complexity of the AEC module while maintaining or only marginally degrading the cancellation performance. To do so, the state-of-the-art reference signals, e.g., signals that are reproduced by the loudspeakers, are filtered with measured acoustic echo paths (AEPs) or a part thereof, e.g., only the loudspeaker and or microphone responses, in the processing path. In doing so, it is possible to reduce the length of the adaptive filters employed for system identification since it is no longer necessary to estimate the entire AEP.

Even though the proposed concepts already provide advantages for single-microphone single-loudspeaker loudspeaker-enclosure-microphone (LEM) environments, in some embodiments, the computational complexity of AEC for acoustic setups that comprise several loudspeakers, e.g., for multi-channel acoustic echo cancellation (MC-AEC) is reduced.

The use of filtered reference signals for multi-channel acoustic echo cancellation, e.g., achieves, inter alia, a plurality of additional advantages.

E.g., reducing the adaptive filter's length does not only reduce the computational complexity load, but also enhances the convergence rate of the adaptive algorithm. This helps mitigating the convergence rate constraints of multi-channel acoustic echo cancellation for highly related loudspeaker signals [6].

By applying a nonlinear transformation to the multi-channel reference signals, the relation between them can be reduced [6]. This helps mitigating the non-uniqueness problem presented by multi-channel acoustic echo cancellation for completely correlated loudspeaker signals [6].

In multiple-loudspeaker multiple-microphone acoustic setups, for loudspeaker-enclosure-microphone systems that are equipped with more than one microphone, the proposed approach can be deployed in two different manners if one acoustic echo cancellation module is placed for each microphone before applying a beamformer (BF) [7]:
In an embodiment, the acoustic echo paths are measured for each microphone, or, in a second embodiment, the acoustic echo paths are measured for a sub-set of microphones, denoted in the following as reference microphones.

For example, an adaptive algorithm estimates a system that copes with the errors in the measured acoustic echo paths for the reference microphones. Or, a relation between a measured reference acoustic echo path and an acoustic echo path between a loudspeaker and the microphones other than the reference microphones in the frequency domain is estimated.

Alternatively, a BF first configuration could be employed [8]. If such a configuration is employed, the process of computing the filtered reference signal for the single-channel acoustic echo cancellation module would be as follows.

Filtered-reference signals for each microphone are computed. The spatial filter is applied to the filtered-reference signals to obtain an equivalent filtered-reference at the output of the beamformer.

One of the advantages offered by this concept with respect to state-of-the-art BF first configurations (for first beamformer configurations, see for example [9, 10, 11, 12, 13]) is the fact the adaptive single-channel system identification algorithm would be agnostic to changes in the spatial filter weights due to modifications in the look direction, undesired signal estimation, etc.

Particular example embodiments may, e.g., realized using one or more or all of the following features:
The acoustic echo path may, e.g., be modelled by at least two filters in series with different update rates.
- The first filter is applied to the reference signal and is constructed such that the (possibly delayed) output provides a first estimate of the echo signal.
- The second filter is applied to the output of the first filter and is constructed to minimize the error between the estimated echo signal provided by the second filter (a second estimate of the echo signal) and the true echo signal.

The first/second filter may, e.g., be determined
- By the correlation between the reference/first filter output and the microphone signal
- By the error between the microphone signal and the first/second filter output

The first filter may, e.g., be determined
- once when a device is turned on, or
- continuously while the device is turned on.

The outputs of the first filters may, e.g., be employed as reference signals for a single or multi-channel (multi-loudspeaker) interference cancellation module.

The microphone signal(s) may, e.g., be delayed to allow a non-causal second filter. Here, the non-delayed loudspeaker signal is used as a reference / input for the first filter.

Alternatively, the loudspeaker signal is delayed.

The filtering operation may, e.g., be performed
- in the time domain, and/or
- in a transform domain.

For acoustic setups that comprise one or more microphones
- the first filter may, e.g., be computed for each microphone,
- the first filter may, e.g., be computed for a subset of microphones,
- the first filter may, e.g., be subsequently filtered by a spatial filter to obtain one or more spatially filtered reference signals.

In the following, embodiments of the present invention are described in more detail with reference to the figures, in which:
- Fig. 1: illustrates an apparatus for generating an echo signal estimate for acoustic echo cancellation according to an embodiment.
- Fig. 2: illustrates an example for acoustic echo cancellation according to the state of the art.
- Fig. 3a: illustrates an apparatus for generating an echo signal estimate for acoustic echo cancellation according to another embodiment comprising a first filter and a second filter which generate a first echo estimate and a second echo estimate.
- Fig. 3b: illustrates an apparatus for generating an echo signal estimate for acoustic echo cancellation according to a further embodiment comprising a filter which generates a first echo estimate and a second echo estimate.
- Fig. 3c: illustrates an apparatus for generating an echo signal estimate for acoustic echo cancellation according to another embodiment, wherein the apparatus is configured to introduce a delay into the one or more microphone signals.
- Fig. 3d: illustrates an apparatus for generating an echo signal estimate for acoustic echo cancellation according to another embodiment, wherein the apparatus is configured to introduce a delay into the one or more loudspeaker signals.
- Fig. 3e: illustrates an apparatus for generating an echo signal estimate for acoustic echo cancellation according to another embodiment, wherein a first filter of the apparatus 100 is updated depending on the one or more loudspeaker signals and depending on the one or more microphone signals before a delay is introduced into the one or more microphone signals.
- Fig. 3f: illustrates an apparatus for generating an echo signal estimate for acoustic echo cancellation according to a further embodiment, wherein a first filter of the apparatus 100 is updated depending on the one or more loudspeaker signals and depending on the one or more microphone signals after a delay is introduced into the one or more microphone signals.
- Fig. 4a: illustrates an apparatus 100 for generating an echo signal estimate for acoustic echo cancellation according to another embodiment, wherein the apparatus comprises two or more first filters.
- Fig. 4b: illustrates an apparatus for generating an echo signal estimate for acoustic echo cancellation according to a further embodiment, wherein the apparatus 100 comprises exactly one first filter.
- Fig. 5: illustrates an apparatus for generating an echo signal estimate for acoustic echo cancellation according to another further embodiment, wherein a beamformer signal is generated from the one or more microphone signals and acoustic echo cancellation is to be conducted on the beamformer signal.
- Fig. 6: illustrates a single-loudspeaker single-microphone acoustic setup.
- Fig. 7: illustrates another example for acoustic echo cancellation according to the state of the art.
- Fig. 8: illustrates filtered-reference acoustic echo cancellation according to an embodiment.
- Fig. 9: illustrates multi-channel acoustic echo cancellation according to the state of the art.
- Fig. 10: illustrates filtered-reference multi-channel acoustic echo cancellation according to an embodiment.
- Fig. 11: illustrates a performance comparison with simulated data.
- Fig. 12: illustrates stereo concatenated playback signals.
- Fig. 13: illustrates a comparison of the computational complexity.
- Fig. 14: illustrates a performance analysis for echo reduction.

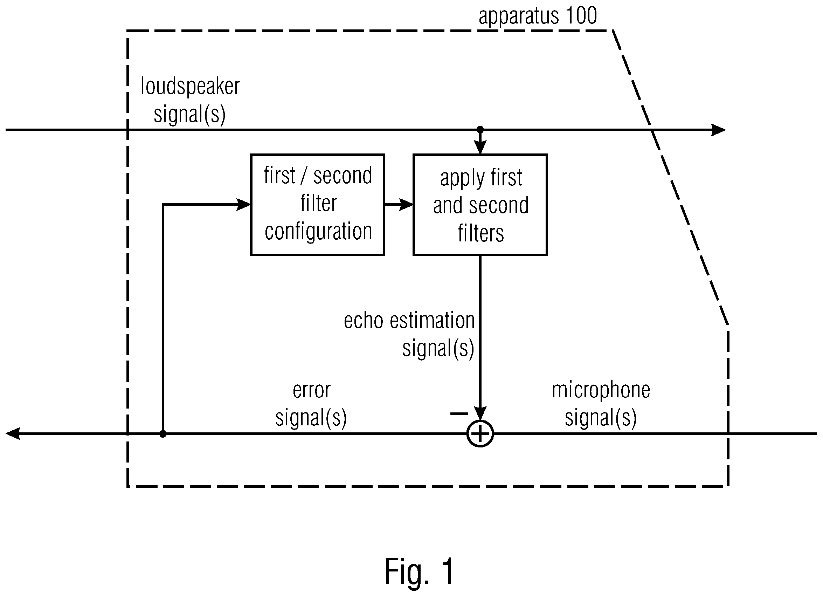

Fig. 1 illustrates an apparatus 100 for conducting acoustic echo cancellation by generating one or more error signals according to an embodiment.

The apparatus 100 is to generate a first echo estimate comprising one or more first echo estimation signals by filtering one or more reference signals using a first filter configuration, wherein the one or more reference signals correspond to one or more loudspeaker signals or are derived from the one or more loudspeaker signals.

Moreover, the apparatus 100 is to generate a second echo estimate comprising one or more second echo estimation signals by filtering the one or more first echo estimation signals using a second filter configuration. Or, the apparatus 100 is to generate the second echo estimate comprising the one or more second echo estimation signals by generating an intermediate signal from the one or more first estimation signals, and by filtering the intermediate signal using the second filter configuration.

Furthermore, the apparatus 100 is to generate the one or more error signals depending on one or more microphone signals and depending on the one or more second echo estimation signals. Moreover, the apparatus 100 is to update the second filter configuration depending on the one or more error signals.

Furthermore, the apparatus 100 is to output the one or more error signals.

In an embodiment, the apparatus 100 may, e.g., be configured to update the second filter configuration depending on the one or more error signals to obtain an updated second filter configuration. The apparatus 100 may, e.g., be configured to update the one or more error signals depending on the updated second filter configuration to obtain one or more updated error signals. To output the one or more error signals, the apparatus 100 may, e.g., be configured to output the one or more updated error signals.

According to an embodiment, the apparatus 100 may, e.g., be configured to not update the first filter configuration at runtime. Or, the apparatus 100 may, e.g., be configured to also update the first filter configuration at runtime, wherein the apparatus 100 may, e.g., be configured to update the second filter configuration at runtime more often than the first filter configuration.

In an embodiment, the apparatus 100 may, e.g., be configured to introduce a delay into the one or more microphone signals. The apparatus 100 may, e.g., be configured to generate the one or more error signals depending on the one or more microphone signals after the delay is introduced by the apparatus 100 into the one or more microphone signals and depending on the one or more second echo estimation signals.

According to an embodiment, the apparatus 100 may, e.g., be configured to introduce a delay into the one or more loudspeaker signals. The one or more reference signals correspond to the one or more loudspeaker signals before the delay is introduced by the apparatus 100 into the loudspeaker signals; or wherein the one or more reference signals are derived from the one or more loudspeaker signals before the delay is introduced by the apparatus 100 into the loudspeaker signals.

In an embodiment, the apparatus 100 may, e.g., be configured to introduce a first delay into the one or more loudspeaker signals. The one or more reference signals may, e.g., correspond to one or more loudspeaker signals before the first delay is introduced by the apparatus 100 into the loudspeaker signals; or, the one or more reference signals may, e.g., be derived from the one or more loudspeaker signals before the first delay is introduced by the apparatus 100 into the loudspeaker signals. Moreover, the apparatus 100 is to introduce a second delay into the one or more microphone signals. Furthermore, the apparatus 100 may, e.g., be configured to generate the one or more error signals depending on the one or more microphone signals after the second delay is introduced by the apparatus 100 into the one or more microphone signals and depending on the one or more second echo estimation signals.

According to an embodiment, the one or more loudspeaker signals may, e.g., be two or more loudspeaker signals.

In an embodiment, the one or more microphone signals are two or more microphone signals. The apparatus 100 may, e.g., be configured to generate the first echo estimate comprising two or more first echo estimation signals as the one or more first echo estimation signals by filtering the one or more reference signals using the first filter configuration. For each of the two or more microphone signals, one of the two or more first echo estimation signals may, e.g., indicate a first estimation of an echo in said one of the two or more microphone signals.

According to an embodiment, the apparatus 100 may, e.g., comprise two or more first filters, wherein the first filter configuration comprises an individual filter configuration for each of the two or more first filters. Each of the two or more first filters may, e.g., be to generate one of the two or more first echo estimation signals by filtering at least one of the one or more reference signals using the individual filter configuration for said one of the two or more first filters.

In an embodiment, the apparatus 100 may, e.g., comprise exactly one first filter. The exactly one first filter may, e.g., be configured to generate all of the two or more first echo estimation signals by filtering the one or more reference signals using the first filter configuration.

According to an embodiment, there may, e.g., be three or more microphone signals. The apparatus 100 may, e.g., comprise two or more first filters being computed for a proper subset of the three or more microphones. The two or more first filters may, e.g., be configured to generate all of the two or more first echo estimation signals by filtering the one or more reference signals using the first filter configuration.

According to an embodiment, the apparatus 100 may, e.g., be configured to generate the second echo estimate, which comprises two or more second echo estimation signals, by filtering the two or more first echo estimation signals using the second filter configuration. For each of the two or more microphone signals, one of the two or more second echo estimation signals may, e.g., indicate a second estimation of the echo in said one of the two or more microphone signals. The apparatus 100 may, e.g., be configured to generate two or more error signals as the one or more error signals depending on the two or more microphone signals and depending on the two or more second echo estimation signals.

In an embodiment, the apparatus 100 may, e.g., comprise two or more second filters, wherein the second filter configuration comprises an individual filter configuration for each of the two or more second filters. Each of the two or more second filters may, e.g., be configured to generate one of the two or more second echo estimation signals by filtering one of the two or more first echo estimation signals using the individual filter configuration for said one of the two or more second filters. Moreover, the apparatus 100 may, e.g., be configured to generate each one of the two or more error signals using only one of the two or more microphone signals and using only that one of the two or more second echo estimation signals, which indicates the second estimation of the echo in said one of the two or more microphone signals. Furthermore, the apparatus 100 may, e.g., be configured to update the individual filter configuration of each second filter of the two or more second filters using the error signal of the two or more error signals which has been generated using said one of the two or more second echo estimation signals that has been generated by said second filter, without using another error signal of the two or more error signals.

According to an embodiment, the apparatus 100 may, e.g., be configured to generate a first beamformer signal from the two or more microphone signals. The apparatus 100 may, e.g., be configured to generate as the intermediate signal a second beamformer signal from the two or more first echo estimation signal Moreover, the apparatus 100 may, e.g., be configured to generate exactly one second echo estimation signal as the second echo estimate by filtering the second beamformer signal using the second filter configuration, such that the second echo estimation signal indicates an estimation of an echo in the first beamformer signal. Furthermore, the apparatus 100 may, e.g., be configured to generate exactly one error signal as the one or more error signals depending on the first beamformer signal and depending on the exactly one second echo estimation signal. Moreover, the apparatus 100 may, e.g., be configured to update the second filter configuration depending on the exactly one error signal. Furthermore, the apparatus 100 may, e.g., be configured to output the exactly one error signal.

In an embodiment, the apparatus 100 may, e.g., be configured to introduce a delay into the first beamformer signal. The apparatus 100 may, e.g., be configured to generate the exactly one error signal depending on the one or more microphone signals after the delay is introduced by the apparatus 100 into the first beamformer signal and depending on the exactly one second echo estimation signal.

According to an embodiment, the apparatus 100 may, e.g., comprise one or more loudspeakers to output the one or more loudspeaker signals. Moreover, the apparatus 100 may, e.g., comprise one or more microphones to generate the one or more microphone signals.

In an embodiment, the apparatus 100 may, e.g., be configured to generate the first echo estimate comprising the one or more first echo estimation signals by filtering the one or more reference signals using the first filter configuration, depending on at least one room impulse between at least one of one or more loudspeakers and at least one of at least one microphone, wherein the one or more loudspeakers are to output the one or more loudspeaker signals, and wherein the one or more microphones are to record the one or more microphone signals.

According to an embodiment, the apparatus 100 may, e.g., be configured to obtain at least one acoustic echo path by measuring said at least one acoustic echo path between said at least one of the one or more loudspeakers and said at least one of the at least one microphone.

In an embodiment, to generate the first echo estimate, the apparatus 100 may, e.g., be configured to filter the one or more reference signals in a time domain to obtain the one or more first echo estimation signals.

According to an embodiment, to generate the first echo estimate, the apparatus 100 may, e.g., be configured to filter the one or more reference signals in a transform domain to obtain the one or more first echo estimation signals.

In an embodiment, to generate the first echo estimate, the apparatus 100 may, e.g., be configured to filter the one or more reference signals in a time domain to obtain the one or more first echo estimation signals depending on the formula: ${x}_{c} \left(n\right) = {c}_{_} x \left(n\right)$ wherein ***x**_{c}*(*n*) is one of the one or more first echo estimation signals, wherein **x**(*n*) is one of the one or more reference signals, wherein **c** is a filter for filtering said one of the one or more reference signals, with ${c}_{_} \approx \left[\begin{matrix}{c}^{T} & 0 & … & 0 \\ 0 & {c}^{T} & ⋱ & ⋮ \\ ⋮ & ⋱ & ⋱ & 0 \\ 0 & … & 0 & {c}^{T}\end{matrix}\right]$ wherein ^{T} indicates a transpose.

According to an embodiment, the apparatus 100 may, e.g., be configured to filter the one or more reference signals to obtain one or more first echo estimation signals depending on the formula: ${x}_{c} \left(l\right) = {\left[{x}_{c}\left(lN-N+1\right)⋯{x}_{c}\left(lN\right)\right]}^{T}$ wherein **x***_{c}*(ℓ) is one of the one or more first echo estimation signals, wherein ${\left[{0}_{N}^{T} {x}_{c}^{T}\left(l\right)\right]}^{T} = diag \left\{{\left[{0}_{N}^{T} {1}_{N}^{T}\right]}^{T}\right\} {{F}_{¯}}^{- 1} {{X}^{∘}}_{c} ,$ wherein ${{X}^{∘}}_{c} \left(l\right) = {\sum }_{p = 0}^{P - 1} {X}_{_} \left(l-p\right) C \left(p\right)$ wherein ${X}_{¯} \left(l-p\right) = diag \left\{{F}_{¯}x\left(l-p\right)\right\}$ wherein $C \left(p\right) = {F}_{¯} {\left[{c}^{T}\left(p\right) {0}_{N}^{T}\right]}^{T}$ wherein $x \left(l-p\right) = {\left[x\left(lN-pN-M+1\right) ⋯ x\left(lN-pN\right)\right]}^{T} , p ∈ \left\{0,…,P-1\right\}$ wherein $c \left(p\right) = {\left[c\left(pN\right) ⋯ c\left(pN+N-1\right)\right]}^{T} , p ∈ \left\{0,…,P-1\right\}$ wherein *L_{c}* indicates a length of an acoustic echo path, wherein *N* indicates a length of a filter partition of a plurality of filter partitions, wherein $P = \left⌈{L}_{c}/N\right⌉$ indicates a number of the plurality of filter partitions, wherein *p* is an index of a *p* -th loudspeaker signal of the one or more loudspeaker signals, wherein ℓ indicates a frame index, wherein *M* = 2*N* indicates a discrete Fourier transform length, wherein **C**(*p*) indicates a frequency domain representation of a calibration filter, wherein **X** indicates a plurality of loudspeaker signal partitions, wherein **F** indicates a discrete Fourier transform matrix of length *M*, wherein **0***_{N}* indicates a vector of length *N* whose elements are all zeroes, wherein **1***_{N}* indicates a vector of length *N* whose elements are all ones, wherein the superscript *å* indicates that an output of a convolution is polluted by circular convolution components, and wherein **F**⁻¹ indicates an inverse DFT matrix defined such that **F**⁻¹**F** = **I**.

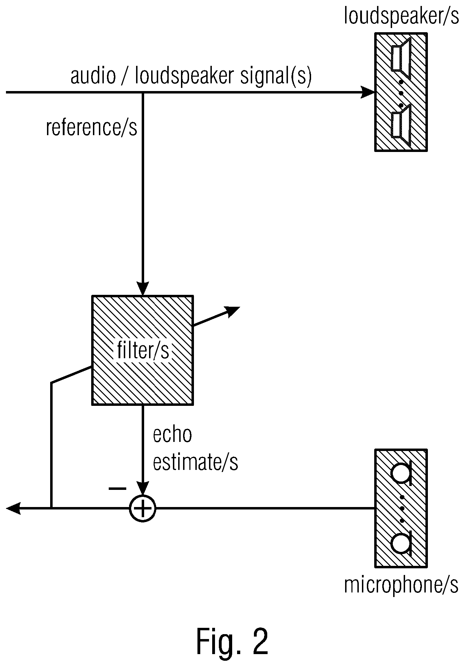

Fig. 2 illustrates an example for acoustic echo cancellation according to the state of the art. to obtain an echo estimation signal. In contrast to the embodiment of Fig. 1, in Fig. 2 of the state of the art, the one or more loudspeaker signals are not filtered to obtain the reference, but instead, the one or more loudspeaker signals are directly used as the reference.

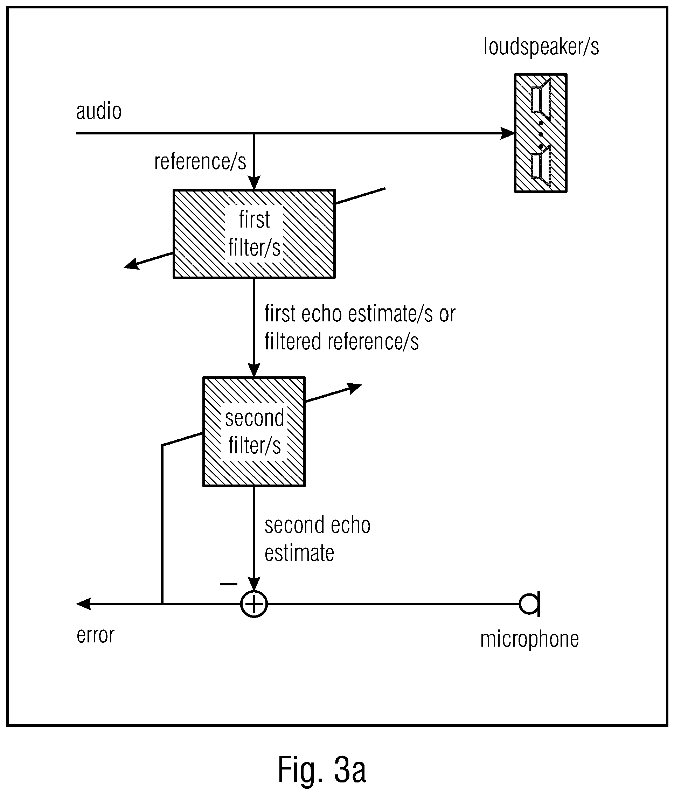

The apparatus 100 is to generate each of the one or more echo estimation signals
Fig. 3a illustrates an apparatus 100 for generating an echo signal estimate for acoustic echo cancellation according to another embodiment. A first filter of the apparatus 100 of Fig. 3a is to generate a first echo estimate comprising one or more first echo estimation signals (first echo estimates / filtered references) by filtering one or more reference signals, being one or more loudspeaker signals, using a first filter configuration. A second filter of the apparatus 100 is to generate a second echo estimate comprising one or more second echo estimation signals by filtering the one or more first echo estimation signals using a second filter configuration. Furthermore, the apparatus 100 is to generate the one or more error signals by subtracting the one or more second echo estimation signals from the one or more microphone signals. The apparatus 100 is to update the second filter configuration of the second filter depending on the one or more error signals. The apparatus 100 is to output the one or more error signals.

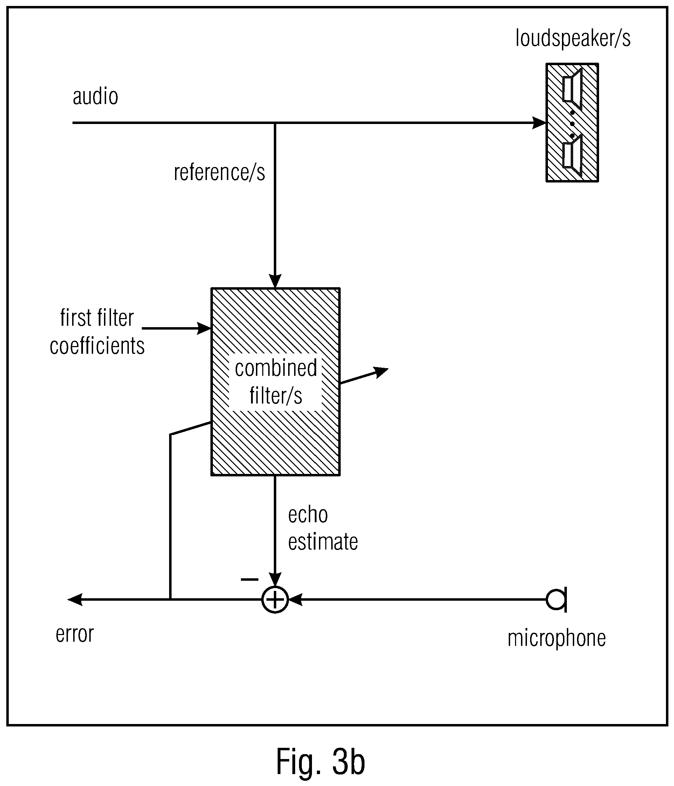

Fig. 3b illustrates an apparatus 100 for generating an echo signal estimate for acoustic echo cancellation according to a further embodiment. A filter of the apparatus 100 of Fig. 3b is to generate an echo estimate comprising one or more echo estimation signals by filtering one or more reference signals, being one or more loudspeaker signals, using a combined filter configuration. In the embodiment of Fig. 3b, the first filter configuration are first filter coefficients. Moreover, the first filter coefficients are used to compute the second combined filter coefficients. Moreover, the filter of the apparatus 100 is to generate an echo estimate comprising one or more echo estimation signals by filtering the one or more reference signals using a combined filter configuration. Furthermore, the apparatus 100 is to generate the one or more error signals by subtracting the one or more echo estimation signals from the one or more microphone signals. The apparatus 100 is to update the second filter configuration of the second filter depending on the one or more error signals. The apparatus 100 is to output the one or more error signals.

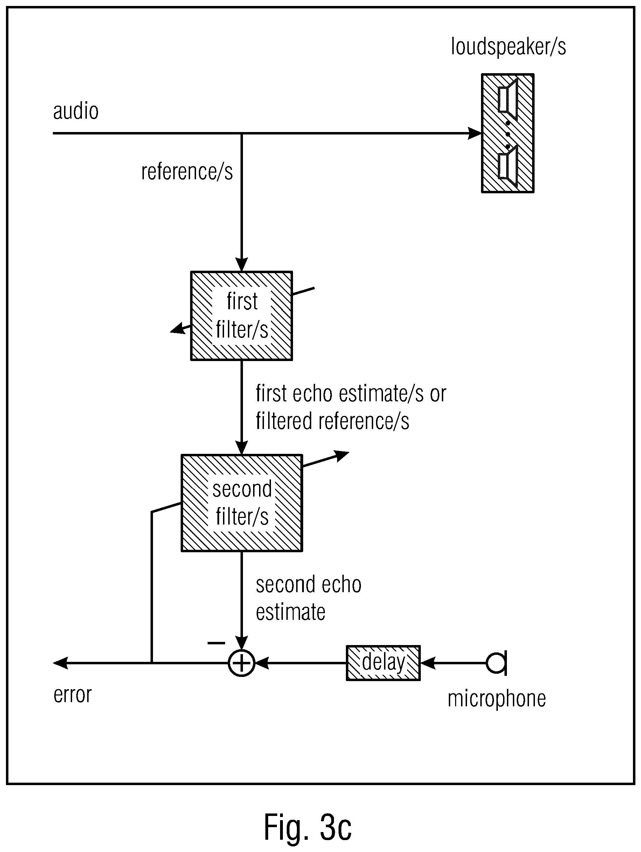

Fig. 3c illustrates an apparatus 100 for generating an echo signal estimate for acoustic echo cancellation according to another embodiment. The embodiment of Fig. 3c is based on the embodiment of Fig. 3a. In addition, the apparatus 100 of Fig. 3c is configured to introduce a delay into the one or more microphone signals, before the one or more microphone signals are used by the apparatus 100 for generating the error signals. Introducing the delay into the one or more microphone signals supports acoustic echo cancellation.

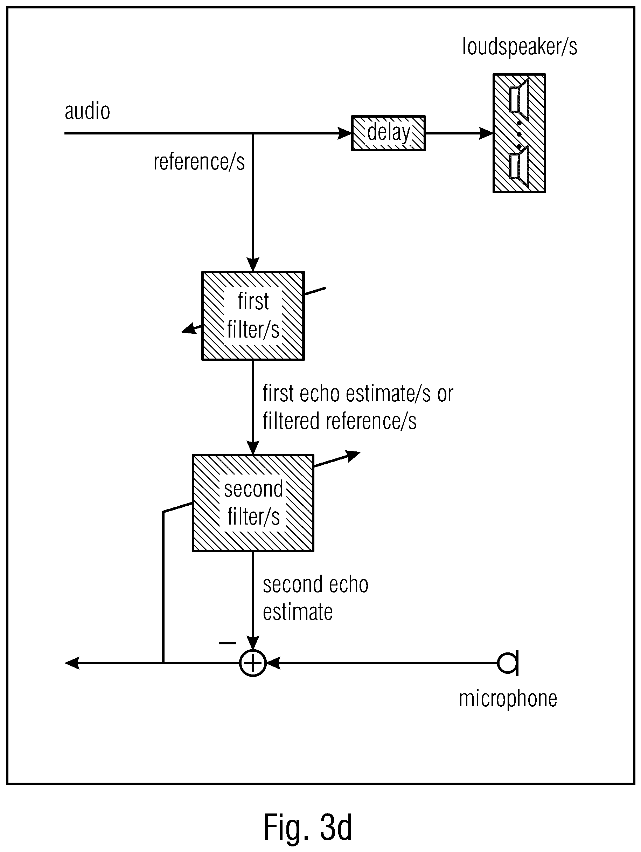

Fig. 3d illustrates an apparatus 100 for generating an echo signal estimate for acoustic echo cancellation according to a further embodiment. The embodiment of Fig. 3d is based on the embodiment of Fig. 3a. In addition, the apparatus 100 of Fig. 3d is configured to introduce a delay into the one or more loudspeaker signals, after the one or more loudspeaker signals are used by the apparatus 100 as one or more reference signals for generating the one or more first echo estimation signals. Introducing the delay into the one or more loudspeaker signals supports acoustic echo cancellation.

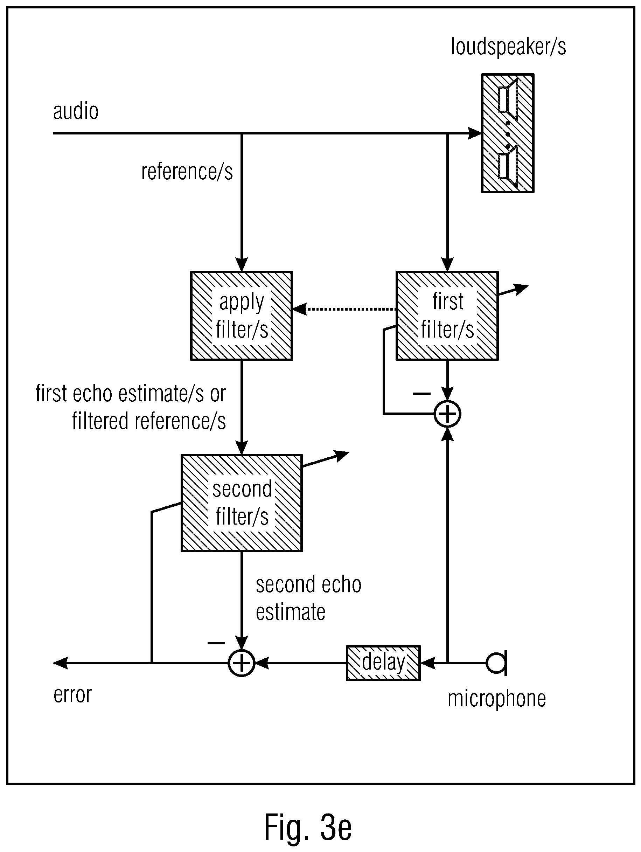

Fig. 3e illustrates an apparatus 100 for generating an echo signal estimate for acoustic echo cancellation according to another embodiment. The embodiment of Fig. 3e is based on the embodiment of Fig. 3c. In the embodiment of Fig. 3e, the first filter of the apparatus 100 is updated depending on the one or more loudspeaker signals and depending on the one or more microphone signals before the delay is introduced into the one or more microphone signals.

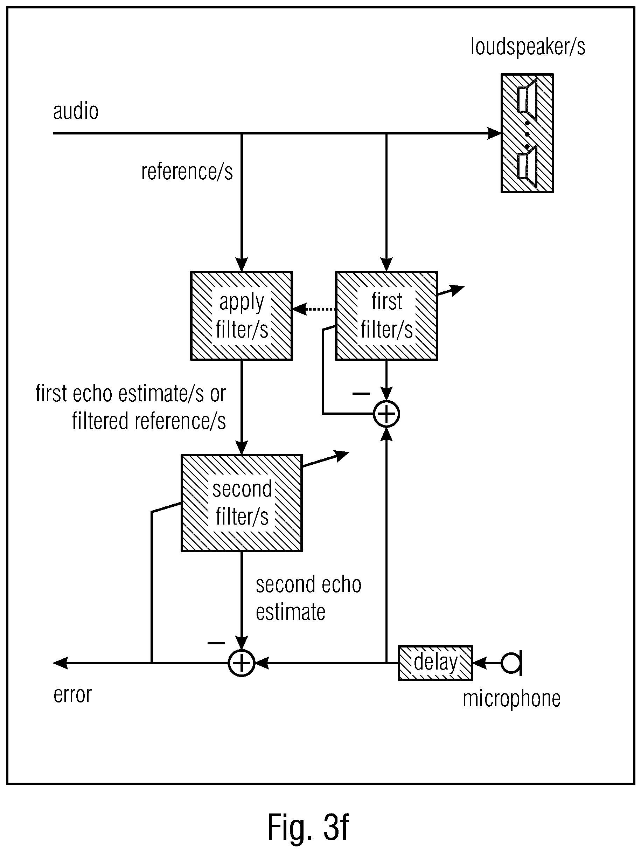

Fig. 3f illustrates an apparatus 100 for generating an echo signal estimate for acoustic echo cancellation according to a further embodiment. The embodiment of Fig. 3f is based on the embodiment of Fig. 3c. In the embodiment of Fig. 3f, the first filter of the apparatus 100 is updated depending on the one or more loudspeaker signals and depending on the one or more microphone signals after the delay is introduced into the one or more microphone signals.

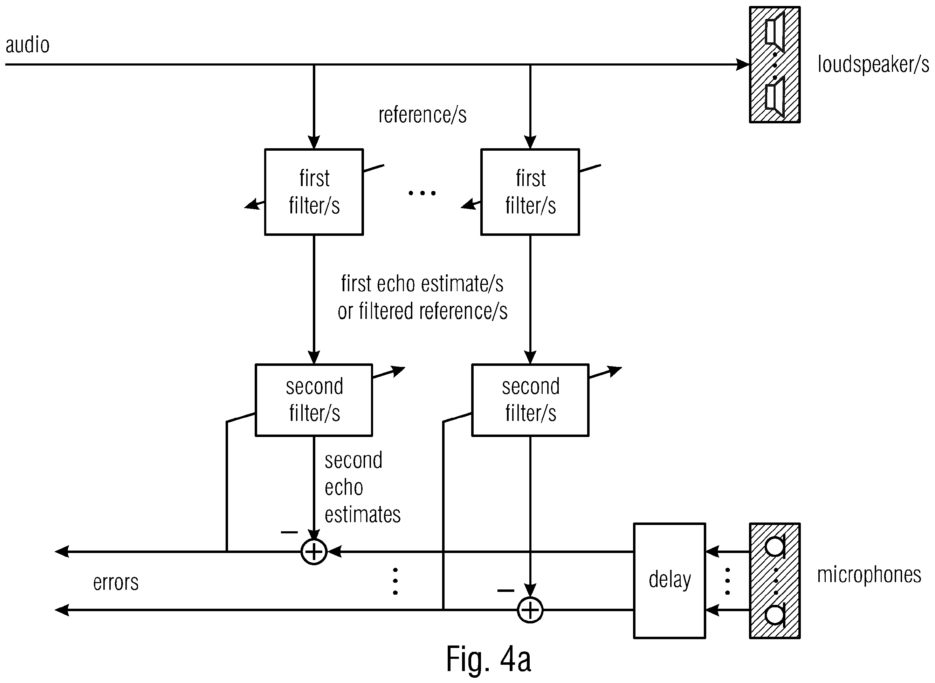

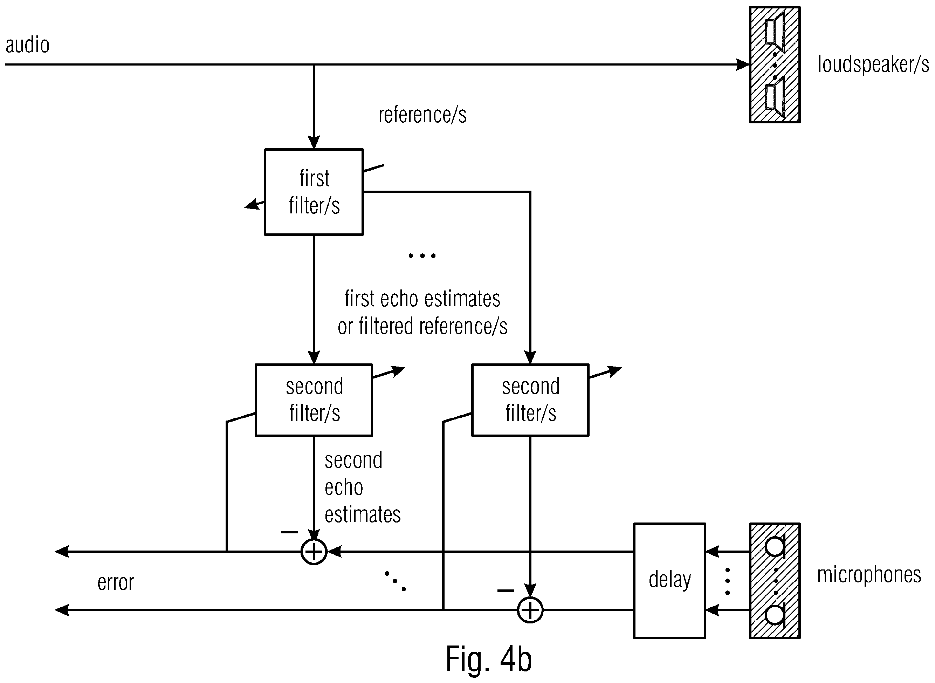

Fig. 4a illustrates an apparatus 100 for generating an echo signal estimate for acoustic echo cancellation according to another embodiment. The apparatus 100 of Fig. 4b comprises two or more first filters, wherein the first filter configuration comprises an individual filter configuration for each of the two or more first filters. Each of the two or more first filters of the apparatus 100 of Fig. 4a is configured to generate one of the two or more first echo estimation signals by filtering at least one of the one or more reference signals using the individual filter configuration for said one of the two or more first filters.

Fig. 4b illustrates an apparatus for generating an echo signal estimate for acoustic echo cancellation according to a further embodiment, wherein the apparatus 100 comprises exactly one first filter. The exactly one first filter of the apparatus of Fig. 4b is configured to generate all of the two or more first echo estimation signals by filtering the one or more reference signals using the first filter configuration.

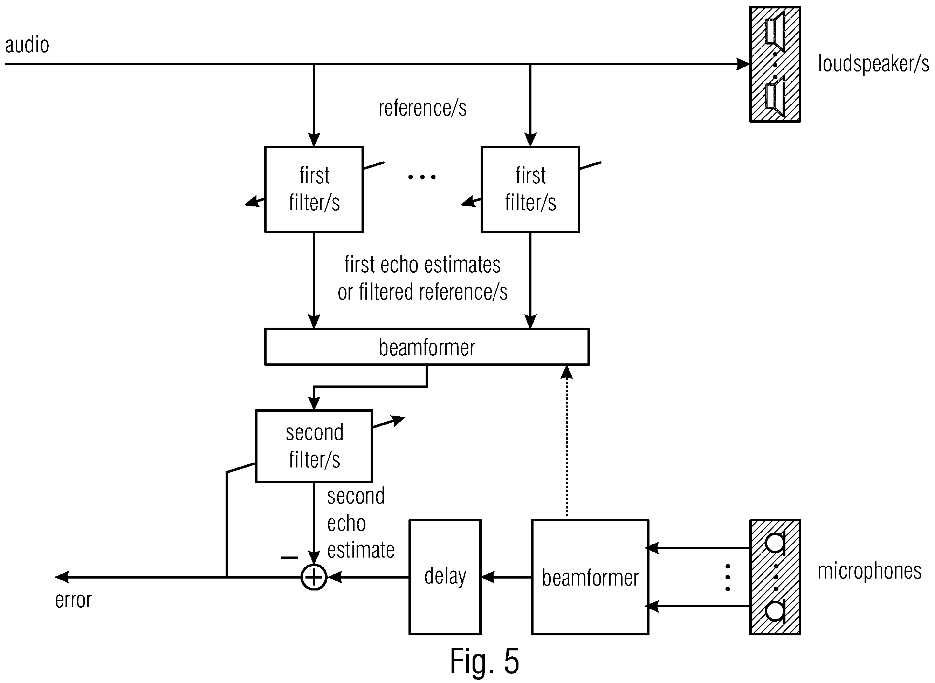

Fig. 5 illustrates an apparatus for generating an echo signal estimate for acoustic echo cancellation according to another further embodiment. In the embodiment of Fig. 5, a beamformer signal is generated from the one or more microphone signals and acoustic echo cancellation is to be conducted on the beamformer signal. The apparatus 100 is configured to generate a first echo estimate comprising one or more first echo estimation signals by filtering one or more reference signals using a first filter configuration, wherein the one or more reference signals correspond to one or more loudspeaker signals or are derived from the one or more loudspeaker signals. Then, using a beamformer module, the apparatus 100 of Fig. 5 is to generate an intermediate signal from the one or more first estimation signals, and is to filter the intermediate signal using the second filter configuration to generate the second echo estimate comprising the one or more second echo estimation signals.

Furthermore, the apparatus 100 is to generate the one or more error signals depending on one or more microphone signals and depending on the one or more second echo estimation signals. Moreover, the apparatus 100 is to update the second filter configuration depending on the one or more error signals.

Furthermore, the apparatus 100 is to output the one or more error signals.

Before further embodiments are described in more detail, some background considerations are presented.

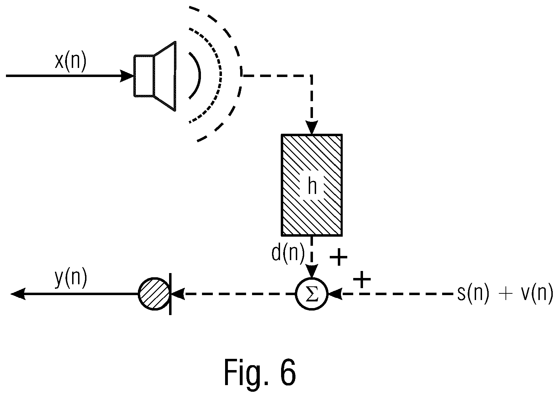

Fig. 6 illustrates a single-loudspeaker single-microphone acoustic setup. Given an LEM environment with one loudspeaker and one microphone as the one depicted in Fig. 6, the signal acquired by the microphone at discrete time *n,* denoted as *y*(*n*), is equal to $y \left(n\right) = d \left(n\right) + s \left(n\right) + v \left(n\right) ,$ (1) where *d*(*n*) is the echo signal, *s*(*n*) is the near-end speech and *v*(*n*) is the background noise. The echo signal, i.e., the signal that results from the acoustic coupling between loudspeaker and microphone, is given by *d*(*n*) = **h***^{T}***x**(*n*), where **h** is the AEP, **x**(*n*) is the signal that is reproduced by the loudspeaker and *·^{T}* denotes transposition. In the remainder, it is assumed that the AEP can be modeled as a finite impulse response (FIR) filter of length *Lₕ* , and consequently: $h = {\left[h\left(0\right),…, h\left({L}_{h}-1\right)\right]}^{T}$ (2) $x \left(n\right) = {\left[x\left(n\right),…, x\left(n-{L}_{h}+1\right)\right]}^{T}$ (3)

The aim of AEC is to compute an echo signal estimate *d̂*(n) that is then subtracted from the microphone signal, resulting in echo reduction [1]. To achieve this, adaptive filtering techniques [2] are employed to estimate the AEP between the loudspeaker and the microphone. In the remainder, estimates are denoted by the upper script â. The echo signal estimate *d̂*(*n*) may, e.g., comprise one or more echo estimation signals.

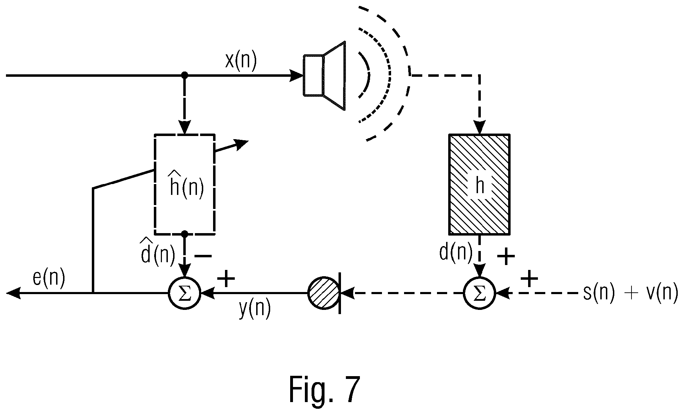

Fig. 7 illustrates acoustic echo cancellation according to the state of the art. If state-of-the-art AEC as depicted in Fig. 7 is employed, the signal that is reproduced by the loudspeaker is used as reference for the adaptive estimation process, i.e., $\hat{h} \left(n+1\right) = \hat{h} \left(n\right) + {μ}_{_} \left(n\right) x \left(n\right) e \left(n\right)$ (4) where ***µ***(*n*) denotes a step-size matrix, which is algorithm dependent, and the error signal after cancellation *e*(*n*) is given by $e \left(n\right) = {\left[h-\hat{h}\left(n\right)\right]}^{T} x \left(n\right) + s \left(n\right) + v \left(n\right)$ (5)

Note that the adaptive filter aims at computing the AEP estimate **ĥ**(*n*) that minimizes the error signal at the output of the canceler, i.e., the one that provides the largest echo reduction.

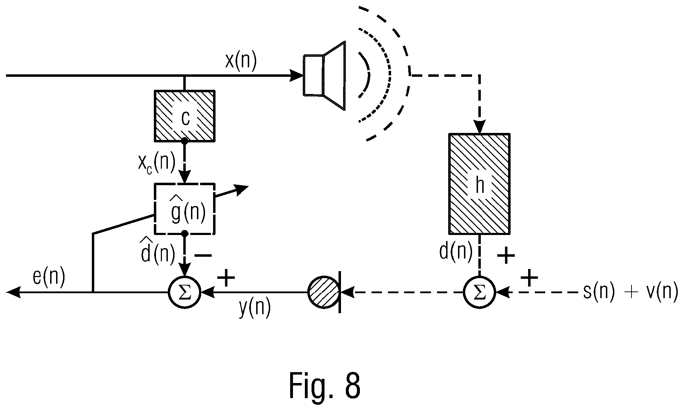

Fig. 8 illustrates filtered-reference acoustic echo cancellation according to an embodiment. In embodiments, a filtered reference signal **x***_{c}*(*n*) = **cx**(*n*) as depicted in Fig. 8 may, e.g., be employed, where the filter c may, e.g., be a *L_{g}* × (*L_{c} + L_{g} -* 1) matrix of the form ${c}_{_} \approx \left[\begin{matrix}{c}^{T} & 0 & … & 0 \\ 0 & {c}^{T} & ⋱ & ⋮ \\ ⋮ & ⋱ & ⋱ & 0 \\ 0 & … & 0 & {c}^{T}\end{matrix}\right]$ (6) with c = [*c*(*0*), *...* , *c*(*L_{c}* - 1)]^{T} and *L_{c} = Lₕ - L_{g}* + 1.

(*L_{c}* may, e.g., indicate a length of the filter **c**. *L_{g}* may, e.g., indicates a length of the filter g.)

If this is done, the error signal can be rewritten as $\begin{matrix}e \left(n\right) = {\left[h-{{c}_{_}}^{T}\hat{g}\left(n\right)\right]}^{T} x \left(n\right) + s \left(n\right) + υ \left(n\right) \\ = {h}^{T} x \left(n\right) - {\hat{g}}^{T} \left(n\right) {x}_{c} \left(n\right) + s \left(n\right) + υ \left(n\right) \\ = {\left[{g}^{opt}-\hat{g}\left(n\right)\right]}^{T} {x}_{c} \left(n\right) + s \left(n\right) + υ \left(n\right)\end{matrix}$ (7) where the system to be identified **g**^{opt} = [*g*^{opt}(0), ..., *g*^{opt}(*L_{g}* - 1)]^{T} models the difference between the true AEP and the pre-processing filter c. Note that in order to formulate the error as in Eq. (7) it is assumed that both **c** and **g**^{opt} can be modeled as FIR filters of length *L_{c}* ≤ *Lₕ* and *L_{g}* ≤ *Lₕ*, respectively.

The generic update equation of an adaptive filter that aims at estimating **g**^{opt} such that *E*{|*e*(*n*)|²} is minimized takes the form $\hat{g} \left(n+1\right) = \hat{g} \left(n\right) + {η}_{_} \left(n\right) {x}_{c} \left(n\right) e \left(n\right)$ (8) where *E*{·} denotes the expectation operator and ***η***(*n*) is a step size matrix that is algorithm dependent.

Given the error equation (7), it is possible to expect that having knowledge on the true AEP would aid the adaptation process in terms of its convergence and re-convergence rate if *L_{g}* < *Lₕ*, since the shorter the adaptive filter, the faster it converges. To this end, one could employ a calibration phase to measure the acoustic echo path, such that **c** = **c** ≈ **h**.

For instance, if the AEP measurement were perfect, then ***x**c*(*n*) = *d*(*n*) and **g**^{opt}(*n*) = 1. Consequently, it would suffice to estimate *L_{g}* = 1 filter coefficients. Nevertheless, in practice measured AEPs present measurement errors, e.g., they are degraded due to the microphone self-noise, therefore in (7) the optimum impulse response estimate g(n) would aim at modelling the error in the AEP measurement such that it would be necessary to estimate *L_{g}* > 1 filter coefficients.

In the following, embodiments, which realize an implementation in the frequency domain are described.

In the example described above, the process to obtain the filtered-reference signal is described in relation to the adaptive filter's update equation and the error signal formulation. The above provided equations can be equivalently written in the frequency domain. However, assuming that the calibration filters are time invariant or slowly time varying, one would pre-process the reference signal before passing it to the MC-AEC module in practice. Therefore, the pre-processing and MC-AEC modules are assumed to be interfaced in the time domain regardless of the adaptive filter's implementation, and only the filtered reference signal computation is considered in the following.

The computational overhead introduced by computing the filtered reference signal can be kept low if the filtering operation is applied in the frequency domain. Note that frequency domain convolutions are equivalent to circulant convolutions in time domain [14, 15, 16]. For optimal performance, it is necessary to select only the linear convolution components after applying the filter.

This selection step is commonly denoted as constraint operation. In the following, the filtering operation is described in the partitioned-block frequency domain [17]. Note that this formulation degenerates into the non-partitioned one if the number of partitions P is set to 1. The advantage provided by the partitioned formulation is the fact that the buffering delay, which is proportional to the partition length, can be arbitrarily selected and is independent of the filter length.

As before, it is assumed that the length of the measured AEP is *L_{c}.* If one employs a partitioned formulation of the calibration filter, each filter partition of length N is given by $c \left(p\right) = {\left[c\left(pN\right)⋯c\left(pN+N-1\right)\right]}^{T} , p ∈ \left\{0,…, P-1\right\}$ (9) where the number of partitions is $P = \left⌈{L}_{c}/N\right⌉$*.* Using an overlap save formulation with a 50% overlap [14, 16], the p-th loudspeaker signal partition can be formulated as: $x \left(l-p\right) = {\left[x\left(lN-pN-M+1\right)⋯x\left(lN-pN\right)\right]}^{T} , p ∈ \left\{0,…, P-1\right\}$ (10) where ℓ denotes the frame index and *M* = *2N* is the discrete Fourier transform (DFT) length. The frequency domain representation of the calibration filter and the loudspeaker signal partitions is respectively given by $C \left(p\right) = {F}_{¯} {\left[{c}^{T}\left(p\right) {0}_{N}^{T}\right]}^{T}$ (11) ${X}_{_} \left(l-p\right) = diag \left\{{F}_{_}x\left(l-p\right)\right\}$ (12) where **F** denotes the DFT matrix of length *M* and **0***_{N}* is a vector of length *N* whose elements are all zeroes. The filtered reference is obtained by convolving in the DFT domain, i.e., ${\dot{X}}_{c} \left(l\right) = {\sum }_{p = 0}^{P - 1} {X}_{¯} \left(l-p\right) C \left(p\right)$ (13)

In Eq. (13), the superscript *å* indicates that the output of the convolution is polluted by circular convolution components. Therefore, it is necessary to select only the linear components: ${\left[{0}_{N}^{T} {x}_{c}^{T}\left(l\right)\right]}^{T} = diag \left\{{\left[{0}_{N}^{T} {1}_{N}^{T}\right]}^{T}\right\} {{F}_{_}}^{- 1} {{X}^{∘}}_{c} ,$ (14) ${x}_{c} \left(l\right) = {\left[{x}_{c}\left(lN-N+1\right) ⋯ {x}_{c}\left(lN\right)\right]}^{T}$ (15) where **F**⁻¹ denotes the inverse DFT matrix defined such that **F**⁻¹**F** = **I** and **1***_{N}* is similarly defined as **0***_{N}*.

Finally, the filtered reference signal in the frequency domain that is used by a frequency-domain adaptive filter (FDAF) can be obtained as ${{X}_{_}}_{c} \left(l\right) = diag \left\{{F}_{_}{\left[{x}_{c}^{T}\left(l-1\right){x}_{c}^{T}\left(l\right)\right]}^{T}\right\}$ (16) if both the filtering operation and the adaptive filter employ the same DFT length M and overlap between subsequent input frames *N*.

In the following, MC-AEC is considered.

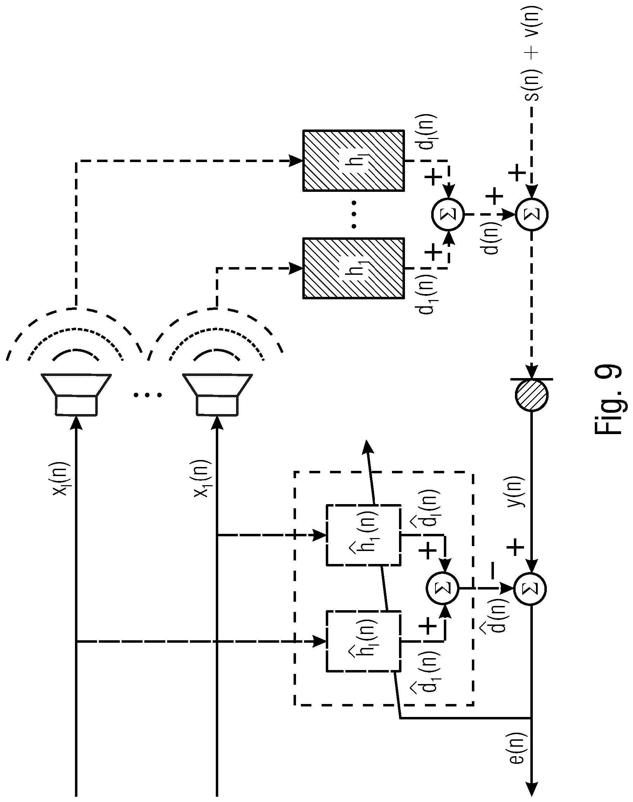

Fig. 9 illustrates multi-channel acoustic echo cancellation according to the state of the art. Given an LEM setup that comprises I loudspeakers and one microphone, like the one depicted in Fig. 9, the MC-AEC module aims at estimating the AEP between each loudspeaker and the microphone **h***ᵢ* = [*hᵢ*(*0*), *..., hᵢ*(*Lₕ -* 1)] with *i* ∈ {1, ... , I}. MC-AEC is known to present two major problems [6]. On the one hand, if the signals that are played back by the loudspeakers are related between them, the convergence rate of the adaptive filter is reduced. On the other hand, the computational complexity of such a system increases, depending on the multichannel adaptive filtering algorithm used, either linearly or even quadratically with the number of playback signals. The use of calibration data to compute filtered reference signals aims at overcoming these two problems, since
- the system identification algorithm does not aim at estimating the AEPs, but the error in their measurement ${g}_{i}^{opt} = {\left[{g}_{i}^{opt}\left(0\right),…,{g}_{i}^{opt}\left({L}_{g}-1\right)\right]}^{T}$, allowing one to reduce the adaptive filter's length, i.e., *L_{g}* ≤ *Lₕ*, and
- filtering the loudspeaker signals with the calibration data naturally decorrelates multi-channel reference signals.

In the following, particular embodiments providing implementations of filtered-reference MC-AEC are described.

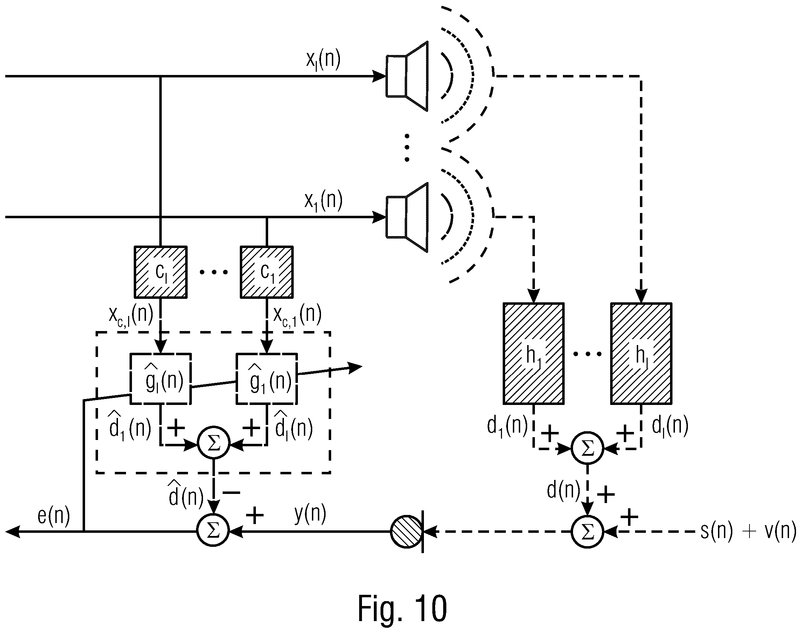

Fig. 10 illustrates filtered-reference multi-channel acoustic echo cancellation according to an embodiment. It should be recalled. that the loudspeaker signals are filtered in the frequency domain The proposed solution using calibration data to compute filtered reference signals for MC-AEC is depicted in Fig. 10. The filtered reference signals may, e.g., be computed as described above, separately for each channel i ${\dot{X}}_{c , i} \left(l\right) = {\sum }_{p = 0}^{P - 1} {{X}_{¯}}_{i} \left(l-p\right) {C}_{i} \left(p\right)$ (17) and afterwards constrained to select only the linear convolution components ${\left[{0}_{N}^{T} {x}_{c , i}^{T}\left(l\right)\right]}^{T} = diag \left\{{\left[{0}_{N}^{T} {1}_{N}^{T}\right]}^{T}\right\} {{F}_{_}}^{- 1} {{X}^{∘}}_{c , i} \left(l\right)$ (18) ${x}_{c , i} \left(l\right) = {\left[{x}_{c , i}\left(lN-N+1\right) ⋯ {x}_{c}\left(lN\right)\right]}^{T}$ (19) with i ∈ {1, ... , I}, where ${C}_{i} \left(p\right) = {F}_{_} {\left[{c}_{i}^{T}\left(p\right) {0}_{N}^{T}\right]}^{T}$ (20) ${X}_{i} \left(l-p\right) = diag \left\{{F}_{¯}{x}_{i}\left(l-p\right)\right\}$ ()21 are the frequency-domain representation of the *i*-th measured AEP and the i-th loudspeaker signal, respectively. Note that **c***ᵢ*(*p*) and **x***ᵢ*(*ℓ* - *p*) are analogously defined as c(p) and **x**(*ℓ* - *p*) in the previous section.

If the filtering of the reference signals and the adaptive algorithm for MCAEC are both implemented in the partitioned-block frequency domain using an equal transform length M and overlap between subsequent input frames N, the i-th filtered reference signal in the frequency domain can be written as ${{X}_{_}}_{c , i} \left(l\right) = diag \left\{{F}_{_}{\left[{x}_{c , i}^{T}\left(l-1\right){x}_{c , i}^{T}\left(l\right)\right]}^{T}\right\}$ (22)

Consequently, if one defines the frequency-domain representation of the *q*-th partition of system to be identified ${g}_{i}^{opt} \left(q\right) = {\left[{g}^{opt}\left(qN\right),…,{g}^{opt}\left(qN+N-1\right)\right]}^{T}$ as ${G}_{i}^{opt} \left(q\right) = {F}_{_} {\left[{g}_{i}^{opt T}\left(q\right) {0}_{N}^{T}\right]}^{T}$ (23) with $q ∈ \left\{0,…,Q-1\right\} = Q = \left⌈{L}_{g}/N\right⌉$*.* If one denotes the estimate of ${G}_{i}^{opt} \left(q\right)$ as **Ĝ***ᵢ*(*q*), the constrained echo estimates can be written as $\hat{D} \left(l\right) = {F}_{¯} diag \left\{\left[{0}_{N}^{T} {1}_{N}^{T}\right]\right\} {{F}_{¯}}^{- 1} {\sum }_{i = 1}^{I} {\sum }_{q = 0}^{Q - 1} {{X}_{¯}}_{c , i} \left(l-b\right) {\hat{G}}_{i} \left(l, b\right)$ (24)

Therefore, analogously to any state-of-the-art MC-AEC implementation in the frequency domain, the error signal after cancellation is given by $E \left(l\right) = Y \left(l\right) - \hat{D} \left(l\right)$ (25) where $A \left(l\right) = {F}_{_} {\left[{0}_{N}^{T}{a}^{T} \left(l\right)\right]}^{T}$ with *a* ∈ {*e, y, d̂*}, and **a**(ℓ) = [*a*(ℓ*N +* 1), *...* , *a*(ℓ*N + N*)]*^{T}.*

As previously mentioned, the computational complexity of MC-AEC can increase either linearly or quadratically with the number of loudspeaker channels.

The adaptive algorithms whose complexity increases only linearly are those which do not take the relation across loudspeaker channels into account when computing the filter update ${\hat{G}}_{i} \left(l+1, q\right) = {\hat{G}}_{i} \left(l, q\right) + {F}_{_} diag \left\{{\left[{1}_{N}^{T} {0}_{N}^{T}\right]}^{T}\right\} {{F}_{_}}^{- 1} {{S}_{_}}_{ii} \left(l, q\right) {{X}_{_}}_{c , i}^{H} \left(l-q\right) E \left(l\right)$ (26) where **S***ᵢᵢ* denotes the i-th step-size matrix. For instance, the least-mean squares (LMS) or the normalized least-mean squares (NLMS) algorithms [2]. Alternatively, the recursive least squares (RLS) [18], the affine projection (APA) [5] or the state-space [19] algorithms take the relation between the reference signals into account, i.e., ${\hat{G}}_{i} \left(l+1, q\right) = {\hat{G}}_{i} \left(l, q\right) + {F}_{_} diag \left\{{\left[{1}_{N}^{T} {0}_{N}^{T}\right]}^{T}\right\} {{F}_{_}}^{- 1} {\sum }_{j = 1}^{I} {{S}_{_}}_{ij} \left(l, q\right) {{X}_{_}}_{c , j}^{H} \left(l-q\right) E \left(l\right)$ (27) where ***S**ᵢⱼ* denotes the {*ij*}-th step-size matrix for all *i,j* ∈ {1, ... , I}. This results in the prewhitening of the reference signals, which increases the convergence rate of the adaptation process. However, it comes at the cost of a significant increase in computational complexity for large number of reference channels if long adaptive filters are employed. Therefore, the importance of reducing the adaptive filters' length to ensure that the computational complexity does not exceed the available computational resources.

Summarizing the above, an underlying idea of the proposed filtered-reference MC-AEC algorithm is to reduce the length of the adaptive filters, i.e., $Q = \left⌈{L}_{g}/N\right⌉ < B = \left⌈{L}_{h}/N\right⌉$*,* while maintaining or only moderately reducing the echo reduction capability of an MC-AEC implementation. As a byproduct, the convergence rate of the MCAEC algorithms is enhanced since the relation between the reference signals is reduced and the shorter the adaptive filter the faster it converges. Note that the formulation of the multi-channel adaptive filtering process stays same, and that the only difference between the proposed method and state-of-the-art MC-AEC is the formulation of the employed reference signals.

Particular embodiments may, e.g., comprise one or more or all of the following steps:
1. One or more calibration phases may, e.g., be carried out to measure the acoustic echo path between each loudspeaker and each microphone or be carried out to measure the individual loudspeaker and/or the microphone responses.
2. Calibration may, e.g., be carried out
   - once when a device is turned on, or
   - continuously while the device is turned on.
3. The signal(s) to be played back may, e.g., be filtered in a processing path with the measured acoustic echo path to obtain filtered reference signal(s).
4. The filtering operation may, e.g., be performed
   - in the time domain,
   - in a sub-band domain.
5. For acoustic setups that comprise one or more microphones
   - the filtered reference signal(s) may, e.g., be computed for each microphone,
   - the filtered reference signal(s) may, e.g., be computed for a subset of microphones,
   - the filtered reference signal(s) may, e.g., be subsequently filtered by a beamformer (spatial filter) to obtain one or more spatially-filtered reference signals.
6. The filtered reference signals may, e.g., be employed as reference signals for a single or multi-channel acoustic echo cancellation module.

Application fields of embodiments may, e.g. be low complexity upHear^{®} VQE technology for smart devices and VolP communication.

In the following, the performance of the provided concepts is evaluated.

A series of simulations were conducted to assess the performance of the proposed low-complexity MC-AEC algorithm and to compare it to state-of-the-art MCAEC implementations.

All simulations were conducted employing the state-space algorithm for MCAEC implemented in the partitioned-block frequency domain as described in [20]. For all simulations, the microphone and reference signals employed were sampled at 16 kHz and the size of the filter partitions was set to *N* = 256 samples, with a 50 % overlap between subsequent frames. This implies that the transform length was set to *M* = 512 samples. Further, the adaptive filter length for state-of-the-art MC-AEC was set to 100 ms by default, i.e., *B* = 7 partitions. For both MC-AEC implementations, the use of different number of filter partitions was evaluated, ranging from 1 to 7 partitions.

The exact details of the MC-AEC implementation are irrelevant for the evaluation, since no parameters were modified or specifically tuned for any of the two MC-AEC methodologies under test.

Two different sets of simulations were conducted. First, simulated data was generated and employed to evaluate the proposed approach under controlled conditions. Secondly, recordings were made to assess the performance of both MC-AEC approaches.

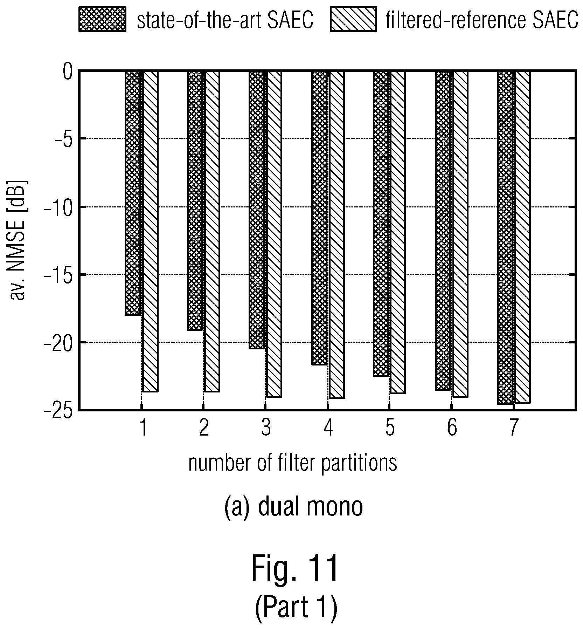

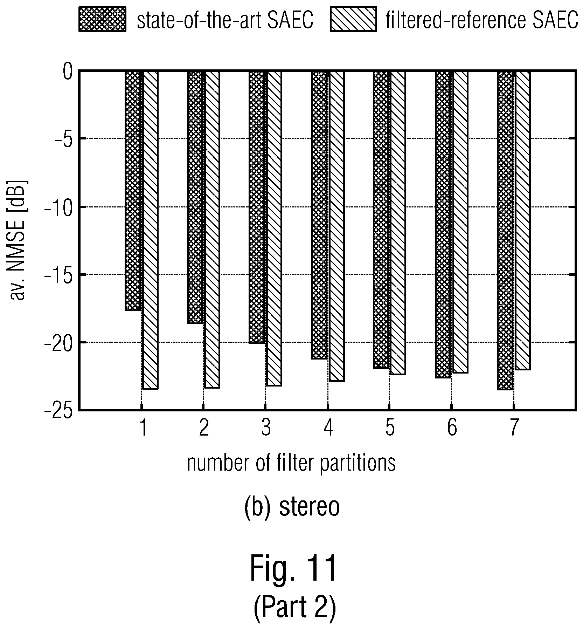

The objective performance measure used to evaluate both MC-AEC approaches is the normalized mean-squared error (NMSE): $NMSE \left(l\right) = 10 {log}_{10} \frac{{\left‖e\left(l\right)\right‖}_{2}^{2}}{{\left‖y\left(l\right)\right‖}_{2}^{2}}$ (28) where ∥·∥₂ is the *l*-2 norm. The NMSE was computed for each frame and the provided NMSE values in Fig. 11 correspond to the average over all frames.

In the following, generated data is considered. To generate the simulated data, room impulse responses (RIRs) were generated using the impulse response generator in [21] for a stereophonic playback setup and a uniform linear array (ULA) with four microphones. The distance between microphones in the array was 3 cm. The loudspeakers were simulated to be 10 cm away from the center of the array, with an angle of 60 degree among them. The echo signals were obtained by convolving the generated RIRs with the far-end signals. Finally, white Gaussian noise (WGN) was added to the microphone signals to generate an echo-to-noise ratio (ENR) of 40 dB. No near-end speech was considered in this evaluation.

For the evaluation of the filtered-reference MC-AEC algorithm, white Gaussian noise was added to the generated RIRs to simulate noise in the measurements.

The noisy RIRs were then truncated to the length of the default adaptive filter, i.e., 100 ms. These were then used to obtain the filtered-reference signals for stereo AEC.

Two different test-cases were evaluated:
- Dual mono content
- Stereo content

Fig. 11 illustrates a performance comparison with simulated data.

Since all microphones in the array delivered similar results, only the obtained results obtained for one of the microphones are provided in Fig. 11. It can be observed that, regardless of the relation between the loudspeaker signals, employing filtered reference signals presents an advantage over using state-of-the-art reference signals. For this particular set of simulations, the use of the proposed approach allows one to reduce the filter length to its minimum, i.e., Q = 1 partition, while losing less than one dB in echo reduction with respect to state-of-the-art MC-AEC with B = 7 partitions. Also note that for stereo playback, the echo reduction capability of the proposed approach improves with decreasing adaptive filter lengths. This implies that if filtered-references are employed, using long adaptive filters could prove counterproductive [20].

In the following, recorded data is considered. To evaluate the proposed approach with real data, recordings were done in a laboratory. To this end, a ULA with four microphones was employed for sound acquisition. The employed microphones were DPA microphones [] and the inter-microphone was of 3 cm. For playback, two Genelec loudspeakers were employed. Both loudspeakers were placed facing the array, with a distance of 30 cm to the center of the array. The angle among them was of approximately 75 degrees.

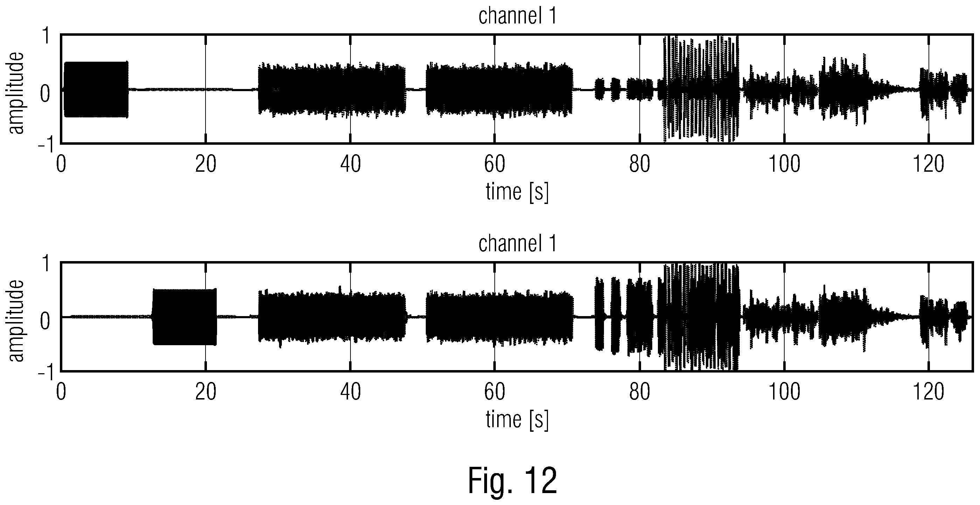

Both the playback and recording was conducted to ensure the synchronicity of the signals. The sampling rate of both the played back and acquired signals was 48 kHz. The recordings were conducted in one session, using a concatenated audio file for playback that did comprise:
1. Logarithmic sweep in channel 1
2. Logarithmic sweep in channel 2
3. Spatially uncorrelated WGN
4. Completely correlated WGN (dual mono)
5. Four different music excerpts and one voice excerpt, as depicted in Fig. 12

Fig. 12 illustrates stereo concatenated playback signals.

For the processing stage, all signals were downsampled to 16 kHz. The downsampled files were cut into five segments. The two logarithmic sweeps were employed for the RIR measurement. The other three segmented signals were employed for processing and evaluation.

Two different sets of results are presented for the proposed approach:
- Without taking pre-echoes in the measured RIRs.
- Taking pre-echoes into account in the measured RIRs. For this particular case, one frame of pre-echoes was considered, i.e., 256 samples at 16 kHz.

Note that if this is done, the microphone signal has to be delayed by the same number of samples. This adds delay to the processing path, but as shown in the performance evaluation, it also results in a very large increase in performance.

The length of the calibration filters was for both test cases equal to 100 ms.

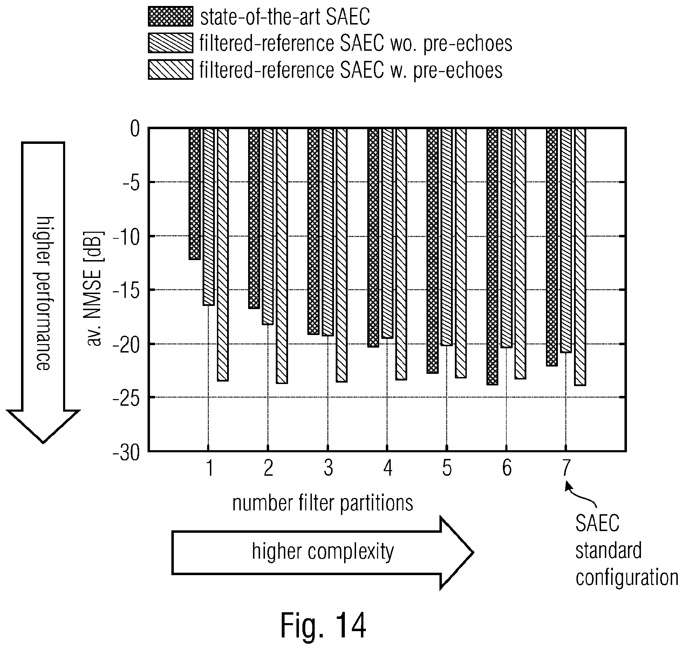

Fig. 14 illustrates a performance comparison with recorded data.

The results obtained for one of the microphones in the array are depicted in Fig. 14. It can be observed that, in general, the use of filtered-reference MC-AEC offers an advantage with respect to state-of-the-art MC-AEC if the AEP pre-echoes are considered when measuring the calibration filters. Note that this introduces a delay in the microphone signal path. However, even when for this simulations an entire frame was considered, this delay can be computed on a sample-basis an implemented as a time domain buffer before the AEC module.

Considering the different stereo signal content separately (see Fig. 14), it can be observed that for completely correlated WGN the proposed approach achieves a higher echo reduction as state-of-the-art MC-AEC if both implementations use adaptive filters of the same length. Further, the proposed approach with pre-echoes and *P* = Q = 2 filter partitions already offers comparable echo reduction as the state-of-the-art one with *P = B* = 7. On the other hand, for signals that are not completely correlated, the proposed approach with pre-echoes offers nearly equal echo reduction for all filter lengths. Moreover, it can achieve comparable echo reduction as state-of-the-art MC-AEC with *P = B* = 7 regardless of the filter length.

In the following, a theoretical complexity analysis is described. A computational complexity analysis is provided. The analysis is based on the number of basic operations, i.e., additions and multiplications. The computational complexity introduced by the measurement of the AEPs is not considered in this analysis, since it is assumed to be negligible if compared to that of the filtered reference signal creation and MC-AEC modules.

In the following, reference signal creation is considered. The computational complexity overhead introduced by creating the filtered reference (FR) signals using a partitioned-block frequency-domain implementation is equal to: $O \left(FR\right) = I \left[{{2 O \left(FFT\right) + M}_{︸}}_{transform + constraint}+{{P ⋅ M O \left(ℂ mult\right) + \left(P-1\right) 2 M}_{︸}}_{filtering}\right]$ (29) for each input frame. In (29), 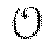 (FFT) ≈ 2M log₂(*M*)-4M is the computational complexity of a fast Fourier transform (FFT) of length M and $O \left(ℂ mult\right) = 6$ is that of a complex multiplication of length 1 (see [22] and references therein).

In the following, multi-channel AEC is considered. Recall that regardless of the MC-AEC method use, the adaptive filtering process for each block and frame stays same. Thus, in the following R ∈ {*Q, B*} denotes the number of filter partitions regardless of the MC-AEC approach.

The computational complexity for each frame of computing the echo estimate (EE) is similar to that of the creation of the reference signal, i.e., $O \left(EE\right) = I \left[{{O \left(FFT\right)}_{︸}}_{transform}+{{RM O \left(ℂ mult\right) + \left(R-1\right) 2 M}_{︸}}_{filtering}\right] + {{\left(I-1\right) 2 M}_{︸}}_{{Σ}_{i = 1}^{I}} + {{O \left(FFT\right) + M}_{︸}}_{constraint}$ (30) but implies one sole constraint operation per frame, since the echo estimates of the different channels are summed up. The error signal is commonly computed in the time domain, and then transformed back to the frequency domain by means of one FFT for each frame, i.e., $O \left(EC\right) = N + O \left(FFT\right)$ (31)

Given a multi-channel adaptive filter that takes the relation between the reference channels into account, the computational complexity of the filter update (FU) is equal to $O \left(FU\right) = I R \left[{{M O \left(ℂ mult\right)}_{︸}}_{gradient}+{{2 M + \left(I-1\right) M O \left(ℂ mult\right)}_{︸}}_{stepsize}+{{2 O \left(FFT\right) + M}_{︸}}_{constraint}+2M\right]$ (32)

The computational complexity overhead introduced by the computation of the multi-channel step-size matrices, i.e., **S***ᵢⱼ*(*ℓ, r*) in (27), depends on the specific adaptive algorithm.

To provide an example for a complete adaptive algorithm, the state-space algorithm [23] is employed. The multi-channel implementation of the state-space algorithm in the partitioned-block frequency domain is described in detail in [20], including an in-depth analysis of its computational complexity.

Considering the efficient implementation of the state-space algorithm as described in [20], the computational complexity of the gradient update is: $O \left(FU\right) = I R \left[IMO\left(ℂ mult\right)+2O\left(FFT\right)+2M\right] + 4 M$ (33) and that of the update of the step-size matrix (MU) (Kalman gain computation and update of the system distance covariance matrix): $O \left(MU\right) = \left({\sum }_{i = 0}^{I - 1} I - i\right) R \left[4M+IMO\left(ℂ mult\right)\right] + \left({\sum }_{i = 0}^{I - 2} I - i\right) R \left[2M\right] + I R \left[6M\right] + M .$ (34)

Summarizing the above, given the detailed analysis above, the computational complexity of state-of-the-art MC-AEC for each frame is equal to: $O \left(MC-AEC, B\right) = O \left(EE\right) + O \left(EC\right) + O \left(FU\right) + O \left(MU\right)$ (35) with R = B, and that of the proposed approach with P and R = Q is equal to: $O \left(FR MC-AEC, P, Q\right) = O \left(FR\right) + O \left(EE\right) + O \left(EC\right) + O \left(FU\right) + O \left(MU\right)$ (36)

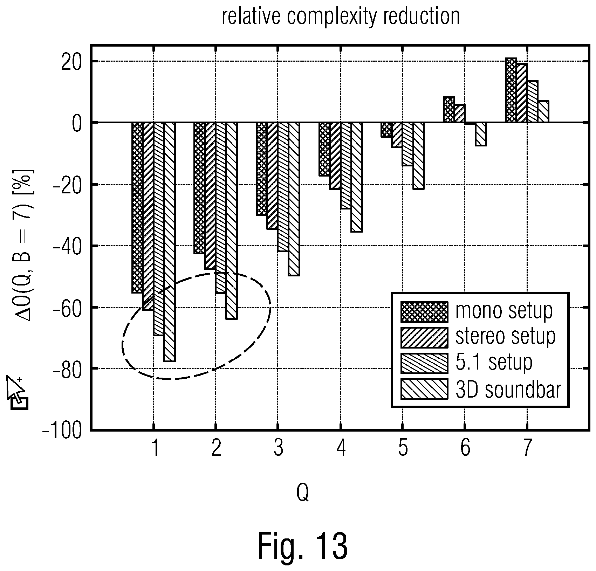

To demonstrate that filtered-reference MC-AEC is capable of reducing the computational complexity with respect to state-of-the-art MC-AEC, the difference in complexity between both approaches, i.e., $ΔO \left(Q, B\right) = \left(\frac{O \left(FR MC-AEC, P, Q\right)}{O \left(MC-AEC, B\right)}-1\right) 100 \left[%\right]$ (37) is depicted in Fig. 13 for different playback configurations, in particular, for mono setup (I = 1), stereo setup (I = 2), 5:1 setup (I = 5), and 3D Soundbar (I = 15).

Fig. 13 illustrates a comparison of the computational complexity. For the computational complexity comparison in Fig. 13, the adaptive filter parametrization used for the performance evaluation was considered. This implies that the computational complexity of state-of-the-art MC-AEC was computed for B = 7 partitions (default adaptive filter length). Further, the number of partitions used for the calibration filters was set to P = 7 and the number of partitions used for filtered-reference MC-AEC ranged from Q = 1 to 7. Finally, it is considered that the efficient implementation of the state-space algorithm in the partitioned-block frequency domain as described in [20] is employed.

Fig. 14 illustrates a performance analysis for echo reduction. The setup of the performance analysis of Fig. 14 did comprise two loudspeakers and one microphone, thus implementing stereo AEC (SAEC). Music and speech recording have been conducted. With respect to the filtered-reference SAEC filter settings, first filters have been determined once at beginning, and second filters have been adapted continuously.

Returning to Fig. 13, Fig. 13 illustrates a theoretical complexity analysis. A relative complexity reduction is achieved when comparing a complexity of FR-MCAEC with Q partitions relative to state-of-the-art MCAEC with 7 partitions (standard configuration). Playback configurations are, e.g., a mono setup (1 AEC), e.g., a stereo setup (2 AECs), e.g., a 5.1 setup (5 AECs), e.g., a 3D Soundbar (15 AECs). Despite of the overhead introduced by filtering the reference signals, the proposed approach can reduce the computational complexity up to nearly 80% with respect to state-of-the-art MC-AEC. Further, it can be observed that the larger the number of loudspeaker channels, the larger the computational complexity reduction.

Although some aspects have been described in the context of an apparatus, these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The embodiments described above are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

[1] E. Hänsler and G. Schmidt, Acoustic Echo and Noise Control: A practical Approach. New Jersey, NY, USA: Wiley, 2004.
[2] S. Haykin, Adaptive Filter Theory, 4th ed. New Jersey, NY, USA: Prentice- Hall, 2002.
[3] M. Luis Valero and E. A. P. Habets, "Low-complexity multi-microphone acoustic echo control in the short-time Fourier transform domain," to appear in IEEE Trans. Audio, Speech, Lang. Process.
[4] M. M. Sondhi, D. R. Morgan, and J. L. Hall, "Acoustic echo cancellation for stereophonic teleconferencing," in the 126th meeting Acoust. Soc. Amer., Denver, CO, USA, Oct. 1993, pp. 4 - 8.
[5] J. Benesty, P. Duhamel, and Y. Grenier, "A multichannel affine projection algorithm with applications to multichannel acoustic echo cancellation," IEEE Signal Process. Lett., vol. 3, no. 2, pp. 35 - 37, Feb. 1996.
[6] J. Benesty, D. R. Morgan, and M. M. Sondhi, "A better understanding and an improved solution to the problems of stereophonic acoustic echo cancellation," in Proc. IEEE Intl. Conf. on Acoust., Speech and Signal Process. (ICASSP), Munich, Germany, Apr. 1997, pp. 303 - 306.
[7] B. D. van Veen and K. M. Buckley, "Beamforming: A versatile approach to spatial filtering," IEEE Acoustics, Speech and Signal Magazine, vol. 5, no. 2, pp. 4 - 24, Apr. 1988.
[8] W. Kellermann, "Joint design of acoustic echo cancellation and adaptive beamforming for microphone arrays," in Proc. Intl. Workshop Acoust. Echo Noise Control (IWAENC), London, UK, Sep. 1997, pp. 81 - 84.
[9] "Strategies for combining acoustic echo cancellation and adaptive beamforming microphone arrays," in Proc. IEEE Intl. Conf. on Acoust., Speech and Signal Process. (ICASSP), Munich, Germany, Apr. 1997, pp. 219 - 222.
[10] R. Martin, S. Gustafsson, and M. Moser, "Acoustic echo cancellation for microphone arrays using switched coefficient vectors," in Proc. Intl. Work-shop Acoust. Echo Noise Control (IWAENC), London, UK, Sep. 1997, pp. 85 - 88.
[11] W. Herbordt, W. Kellermann, and S. Nakamura, "Joint optimization of LCMV beamforming and acoustic echo cancellation," in Proc. European Signal Process. Conf., Vienna, Austria, Sep. 2004, pp. 2003 - 2006.
[12] G. Reuven, S. Gannot, and I. Cohen, "Joint acoustic echo cancellation and transfer function GSC in the frequency domain," in Proc. 23rd IEEE Convention of the Electrical and Electronic Engineers in Israel (IEEEI), Herzlia, Israel, Sep. 2004, pp. 412 - 415.
[13] "Joint noise reduction and acoustic echo cancellation using the transfer-function generalized sidelobe canceller," Speech Communication, vol. 49, no. 7 - 8, pp. 623 - 635, Aug. 2007.
[14] G. A. Clark, S. R. Parker, and S. K. Mitra, "A unified approach to time- and frequency-domain realization of FIR adaptive digital filters," IEEE Trans. Acoust., Speech, Signal Process., vol. 31, no. 5, pp. 1073 - 1083, Oct. 1983.
[15] A. Oppenheim and R. W. Schafer, Digital Signal Processing, 2nd ed. New Jersey, NY, USA: Prentice-Hall, 1993.
[16] J. J. Shynk, \Frequency-domain and multirate adaptive filtering," IEEE Signal Process. Mag., vol. 9, no. 1, pp. 14{37, Jan. 1992.
[17] P. C. W. Sommen, "Partitioned frequency-domain adaptive filters," in Proc. Asilomar Conf. on Signals, Systems and Computers, Pacific Grove, CA, USA, May 1989, pp. 677 - 681.
[18] J. Benesty, F. Amand, A. Gilloire, and Y. Grenier, "Adaptive filtering algorithms for stereophonic acoustic echo cancellation," in Proc. IEEE Intl. Conf. on Acoust., Speech and Signal Process. (ICASSP), Detroit, MI, USA, May 1995, pp. 3099 - 3102.
[19] S. Malik and G. Enzner, "Recursive Bayesian control of multichannel acoustic echo cancellation," IEEE Signal Process. Lett., vol. 18, no. 11, pp. 619 - 622, Nov. 2011.
[20] M. Luis Valero, "Acoustic echo reduction for multiple loudspeakers and microphones: Complexity reduction and convergence enhancement," doctoral thesis, Friedrich-Alexander-Universität Erlangen-Nürnberg (FAU), 2019.
[21] E. A. P. Habets. Room impulse response generator for MATLAB. [Online]. Available: https://github.com/ehabets/RIR-Generator
[22] R. M. M. Derkx, G. P. M. Engelmeers, and P. C. W. Sommen, "New constraining method for partitioned block frequency-domain adaptive filters," IEEE Trans. Signal Process., vol. 50, no. 3, pp. 2177 - 2186, Sep. 2002.
[23] G. Enzner and P. Vary, "Frequency-domain adaptive Kalman filter for acoustic echo control in hands-free telephones," Signal Process., vol. 86, no. 6, pp. 1140 - 1156, Jun. 2006.

## Claims

1. An apparatus (100) for conducting acoustic echo cancellation by generating one or more error signals,
wherein the apparatus (100) is to generate a first echo estimate comprising one or more first echo estimation signals by filtering one or more reference signals using a first filter configuration, wherein the one or more reference signals correspond to one or more loudspeaker signals or are derived from the one or more loudspeaker signals,
wherein the apparatus (100) is to generate a second echo estimate comprising one or more second echo estimation signals by filtering the one or more first echo estimation signals using a second filter configuration; or wherein the apparatus (100) is to generate the second echo estimate comprising the one or more second echo estimation signals by generating an intermediate signal from the one or more first estimation signals, and by filtering the intermediate signal using the second filter configuration,
wherein the apparatus (100) is to generate the one or more error signals depending on one or more microphone signals and depending on the one or more second echo estimation signals,
wherein the apparatus (100) is to update the second filter configuration depending on the one or more error signals, and
wherein the apparatus (100) is to output the one or more error signals,
**characterized in that** the apparatus (100) is to introduce a delay into the one or more microphone signals,
and the apparatus (100) is to generate the one or more error signals depending on the one or more microphone signals after the delay is introduced by the apparatus (100) into the one or more microphone signals and depending on the one or more second echo estimation signals.

2. An apparatus (100) according to claim 1,
wherein the apparatus (100) is configured to not update the first filter configuration at runtime, or
wherein the apparatus (100) is configured to also update the first filter configuration at runtime, wherein the apparatus (100) is to update the second filter configuration at runtime more often than the first filter configuration.

3. An apparatus (100) according to one of the preceding claims,
wherein the one or more loudspeaker signals are two or more loudspeaker signals.

4. An apparatus (100) according to one of the preceding claims,
wherein the one or more microphone signals are two or more microphone signals,
wherein the apparatus (100) is to generate the first echo estimate comprising two or more first echo estimation signals as the one or more first echo estimation signals by filtering the one or more reference signals using the first filter configuration,
wherein, for each of the two or more microphone signals, one of the two or more first echo estimation signals indicates a first estimation of an echo in said one of the two or more microphone signals.

5. An apparatus (100) according to claim 4,
wherein the apparatus (100) comprises two or more first filters, wherein the first filter configuration comprises an individual filter configuration for each of the two or more first filters, wherein each of the two or more first filters is to generate one of the two or more first echo estimation signals by filtering at least one of the one or more reference signals using the individual filter configuration for said one of the two or more first filters; or
wherein the apparatus (100) comprises exactly one first filter, wherein the exactly one first filter is to generate all of the two or more first echo estimation signals by filtering the one or more reference signals using the first filter configuration.

6. An apparatus (100) according to claim 4,
wherein the two or more microphone signals are three or more microphone signals, wherein the apparatus (100) comprises two or more first filters being computed for a proper subset of the three or more microphones,
wherein the two or more first filters are to generate all of the two or more first echo estimation signals by filtering the one or more reference signals using the first filter configuration.

7. An apparatus (100) according to one of claims 4 to 6,
wherein the apparatus (100) is to generate the second echo estimate comprising two or more second echo estimation signals as the one or more second echo estimation signals by filtering the two or more first echo estimation signals using the second filter configuration,
wherein, for each of the two or more microphone signals, one of the two or more second echo estimation signals indicates a second estimation of the echo in said one of the two or more microphone signals,
wherein the apparatus (100) is to generate two or more error signals as the one or more error signals depending on the two or more microphone signals and depending on the two or more second echo estimation signals.

8. An apparatus (100) according to claim 7,
wherein the apparatus (100) comprises two or more second filters, wherein the second filter configuration comprises an individual filter configuration for each of the two or more second filters,
wherein each of the two or more second filters is to generate one of the two or more second echo estimation signals by filtering one of the two or more first echo estimation signals using the individual filter configuration for said one of the two or more second filters,
wherein the apparatus (100) is to generate each one of the two or more error signals using only one of the two or more microphone signals and using only that one of the two or more second echo estimation signals, which indicates the second estimation of the echo in said one of the two or more microphone signals,
wherein the apparatus (100) is to update the individual filter configuration of each second filter of the two or more second filters using the error signal of the two or more error signals which has been generated using said one of the two or more second echo estimation signals that has been generated by said second filter, without using another error signal of the two or more error signals.

9. An apparatus (100) according to one of claims 4 to 6,
wherein the apparatus (100) is to generate a first beamformer signal from the two or more microphone signals,
wherein the apparatus (100) is to generate as the intermediate signal a second beamformer signal from the two or more first echo estimation signal,
wherein the apparatus (100) is to generate exactly one second echo estimation signal as the second echo estimate by filtering the second beamformer signal using the second filter configuration, such that the second echo estimation signal indicates an estimation of an echo in the first beamformer signal,
wherein the apparatus (100) is to generate exactly one error signal as the one or more error signals depending on the first beamformer signal and depending on the exactly one second echo estimation signal,
wherein the apparatus (100) is to update the second filter configuration depending on the exactly one error signal,
wherein the apparatus (100) is to output the exactly one error signal.

10. An apparatus (100) according to claim 9,
wherein the apparatus (100) is to introduce a delay into the first beamformer signal,
wherein the apparatus (100) is to generate the exactly one error signal depending on the one or more microphone signals after the delay is introduced by the apparatus (100) into the first beamformer signal and depending on the exactly one second echo estimation signal.

11. An apparatus (100) according to one of the preceding claims,
wherein the apparatus (100) comprises one or more loudspeakers to output the one or more loudspeaker signals, and
wherein the apparatus (100) comprises one or more microphones to generate the one or more microphone signals.

12. An apparatus (100) according to claim 11,
wherein the apparatus (100) is to generate the first echo estimate comprising the one or more first echo estimation signals by filtering the one or more reference signals using the first filter configuration, depending on at least one room impulse between at least one of one or more loudspeakers and at least one of at least one microphone, wherein the one or more loudspeakers are to output the one or more loudspeaker signals, and wherein the one or more microphones are to record the one or more microphone signals.

13. An apparatus (100) according to claim 12,
wherein the apparatus (100) is to obtain at least one acoustic echo path by measuring said at least one acoustic echo path between said at least one of the one or more loudspeakers and said at least one of the at least one microphone.

14. A method for conducting acoustic echo cancellation by generating one or more error signals, wherein the method comprises:
generating a first echo estimate comprising one or more first echo estimation signals by filtering one or more reference signals using a first filter configuration, wherein the one or more reference signals correspond to one or more loudspeaker signals or are derived from the one or more loudspeaker signals,
generating a second echo estimate comprising one or more second echo estimation signals by filtering the one or more first echo estimation signals using a second filter configuration; or generating the second echo estimate comprising the one or more second echo estimation signals by generating an intermediate signal from the one or more first estimation signals, and by filtering the intermediate signal using the second filter configuration,
generating the one or more error signals depending on one or more microphone signals and depending on the one or more second echo estimation signals,
updating the second filter configuration depending on the one or more error signals, and
outputting the one or more error signals,
**characterized in that** the method further comprises introducing a delay into the one or more microphone signals,
and generating the one or more error signals is conducted depending on the one or more microphone signals after the delay is introduced into the one or more microphone signals and depending on the one or more second echo estimation signals.

15. A computer program for implementing the method of claim 14 when being executed on a computer or signal processor.

## Patentansprüche

1. Vorrichtung (100) zum Durchführen einer akustischen Echounterdrückung durch Erzeugen eines oder mehrerer Fehlersignale,
wobei die Vorrichtung (100) durch Filtern eines oder mehrerer Referenzsignale unter Verwendung einer ersten Filterkonfiguration eine erste Echoschätzung zu erzeugen hat, die ein oder mehrere erste Echoschätzungssignale aufweist, wobei das eine oder die mehreren Referenzsignale einem oder mehreren Lautsprechersignalen entsprechen oder von dem einen oder den mehreren Lautsprechersignalen abgeleitet sind,
wobei die Vorrichtung (100) durch Filtern des einen oder der mehreren ersten Echoschätzungssignale unter Verwendung einer zweiten Filterkonfiguration eine zweite Echoschätzung zu erzeugen hat, die ein oder mehrere zweite Echoschätzungssignale aufweist; oder wobei die Vorrichtung (100) durch Erzeugen eines Zwischensignals aus dem einen oder den mehreren ersten Schätzungssignalen und durch Filtern des Zwischensignals unter Verwendung der zweiten Filterkonfiguration die zweite Echoschätzung zu erzeugen hat, die das eine oder die mehreren zweiten Echoschätzungssignale aufweist,
wobei die Vorrichtung (100) das eine oder die mehreren Fehlersignale in Abhängigkeit von einem oder mehreren Mikrofonsignalen und in Abhängigkeit von dem einen oder den mehreren zweiten Echoschätzungssignalen zu erzeugen hat,
wobei die Vorrichtung (100) die zweite Filterkonfiguration in Abhängigkeit von dem einen oder den mehreren Fehlersignalen zu aktualisieren hat, und
wobei die Vorrichtung (100) das eine oder die mehreren Fehlersignale auszugeben hat,
**dadurch gekennzeichnet, dass** die Vorrichtung (100) eine Verzögerung in das eine oder die mehreren Mikrofonsignale einzuführen hat,
und die Vorrichtung (100) das eine oder die mehreren Fehlersignale in Abhängigkeit von dem einen oder den mehreren Mikrofonsignalen zu erzeugen hat, nachdem die Verzögerung durch die Vorrichtung (100) in das eine oder die mehreren Mikrofonsignale eingeführt wurde, und in Abhängigkeit von dem einen oder den mehreren zweiten Echoschätzungssignalen.

2. Vorrichtung (100) gemäß Anspruch 1,
wobei die Vorrichtung (100) dazu konfiguriert ist, die erste Filterkonfiguration zur Laufzeit nicht zu aktualisieren, oder
wobei die Vorrichtung (100) dazu konfiguriert ist, auch die erste Filterkonfiguration zur Laufzeit zu aktualisieren, wobei die Vorrichtung (100) die zweite Filterkonfiguration zur Laufzeit öfter als die erste Filterkonfiguration zu aktualisieren hat.

3. Vorrichtung (100) gemäß einem der vorhergehenden Ansprüche,
wobei das eine oder die mehreren Lautsprechersignale zwei oder mehr Lautsprechersignale sind.

4. Vorrichtung (100) gemäß einem der vorhergehenden Ansprüche,
wobei das eine oder die mehreren Mikrofonsignale zwei oder mehr Mikrofonsignale sind,
wobei die Vorrichtung (100) durch Filtern des einen oder der mehreren Referenzsignale unter Verwendung der ersten Filterkonfiguration die erste Echoschätzung zu erzeugen hat, die zwei oder mehr erste Echoschätzungssignale als das eine oder die mehreren ersten Echoschätzungssignale aufweist,
wobei für jedes der zwei oder mehr Mikrofonsignale eines der zwei oder mehr ersten Echoschätzungssignale eine erste Schätzung eines Echos in dem einen der zwei oder mehr Mikrofonsignale angibt.

5. Vorrichtung (100) gemäß Anspruch 4,
wobei die Vorrichtung (100) zwei oder mehr erste Filter aufweist, wobei die erste Filterkonfiguration eine individuelle Filterkonfiguration für jedes der zwei oder mehr ersten Filter aufweist, wobei jedes der zwei oder mehr ersten Filter durch Filtern zumindest eines des einen oder der mehreren Referenzsignale unter Verwendung der individuellen Filterkonfiguration für das eine der zwei oder mehr ersten Filter eines der zwei oder mehr ersten Echoschätzungssignale zu erzeugen hat; oder
wobei die Vorrichtung (100) genau ein erstes Filter aufweist, wobei das genau eine erste Filter durch Filtern des einen oder der mehreren Referenzsignale unter Verwendung der ersten Filterkonfiguration alle der zwei oder mehr ersten Echoschätzungssignale zu erzeugen hat.

6. Vorrichtung (100) gemäß Anspruch 4,
wobei die zwei oder mehr Mikrofonsignale drei oder mehr Mikrofonsignale sind, wobei die Vorrichtung (100) zwei oder mehr erste Filter aufweist, die für eine geeignete Teilmenge der drei oder mehr Mikrofone berechnet werden,
wobei die zwei oder mehr ersten Filter durch Filtern des einen oder der mehreren Referenzsignale unter Verwendung der ersten Filterkonfiguration alle der zwei oder mehr ersten Echoschätzungssignale zu erzeugen haben.

7. Vorrichtung (100) gemäß einem der Ansprüche 4 bis 6,
wobei die Vorrichtung (100) durch Filtern der zwei oder mehr ersten Echoschätzungssignale unter Verwendung der zweiten Filterkonfiguration die zweite Echoschätzung zu erzeugen hat, die zwei oder mehr zweite Echoschätzungssignale als das eine oder die mehreren zweiten Echoschätzungssignale aufweist,
wobei für jedes der zwei oder mehr Mikrofonsignale eines der zwei oder mehr zweiten Echoschätzungssignale eine zweite Schätzung des Echos in dem einen der zwei oder mehr Mikrofonsignale angibt,
wobei die Vorrichtung (100) in Abhängigkeit von den zwei oder mehr Mikrofonsignalen und in Abhängigkeit von den zwei oder mehr zweiten Echoschätzungssignalen zwei oder mehr Fehlersignale als das eine oder die mehreren Fehlersignale zu erzeugen hat.

8. Vorrichtung (100) gemäß Anspruch 7,
wobei die Vorrichtung (100) zwei oder mehr zweite Filter aufweist, wobei die zweite Filterkonfiguration eine individuelle Filterkonfiguration für jedes der zwei oder mehr zweiten Filter aufweist,
wobei jedes der zwei oder mehr zweiten Filter durch Filtern eines der zwei oder mehr ersten Echoschätzungssignale unter Verwendung der individuellen Filterkonfiguration für das eine der zwei oder mehr zweiten Filter eines der zwei oder mehr zweiten Echoschätzungssignale zu erzeugen hat,
wobei die Vorrichtung (100) jedes der zwei oder mehr Fehlersignale unter Verwendung nur eines der zwei oder mehr Mikrofonsignale und unter Verwendung nur desjenigen der zwei oder mehr zweiten Echoschätzungssignale zu erzeugen hat, das die zweite Schätzung des Echos in dem einen der zwei oder mehr Mikrofonsignale angibt,
wobei die Vorrichtung (100) die individuelle Filterkonfiguration jedes zweiten Filters der zwei oder mehr zweiten Filter unter Verwendung des Fehlersignals der zwei oder mehr Fehlersignale zu aktualisieren hat, das unter Verwendung des einen der zwei oder mehr zweiten Echoschätzungssignale erzeugt worden ist, das durch das zweite Filter erzeugt worden ist, ohne ein anderes Fehlersignal der zwei oder mehr Fehlersignale zu verwenden.

9. Vorrichtung (100) gemäß einem der Ansprüche 4 bis 6,
wobei die Vorrichtung (100) ein erstes Strahlformersignal aus den zwei oder mehr Mikrofonsignalen zu erzeugen hat,
wobei die Vorrichtung (100) ein zweites Strahlformersignal aus den zwei oder mehr ersten Echoschätzungssignalen als das Zwischensignal zu erzeugen hat,
wobei die Vorrichtung (100) durch Filtern des zweiten Strahlformersignals unter Verwendung der zweiten Filterkonfiguration genau ein zweites Echoschätzungssignal als die zweite Echoschätzung zu erzeugen hat, sodass das zweite Echoschätzungssignal eine Schätzung eines Echos in dem ersten Strahlformersignal angibt,
wobei die Vorrichtung (100) in Abhängigkeit von dem ersten Strahlformersignal und in Abhängigkeit von dem genau einen zweiten Echoschätzungssignal genau ein Fehlersignal als das eine oder die mehreren Fehlersignale zu erzeugen hat, wobei die Vorrichtung (100) die zweite Filterkonfiguration in Abhängigkeit von dem genau einen Fehlersignal zu aktualisieren hat,
wobei die Vorrichtung (100) das genau eine Fehlersignal auszugeben hat.

10. Vorrichtung (100) gemäß Anspruch 9,
wobei die Vorrichtung (100) eine Verzögerung in das erste Strahlformersignal einzuführen hat,
wobei die Vorrichtung (100) das genau eine Fehlersignal in Abhängigkeit von dem einen oder den mehreren Mikrofonsignalen zu erzeugen hat, nachdem die Verzögerung durch die Vorrichtung (100) in das erste Strahlformersignal eingeführt wurde, und in Abhängigkeit von dem genau einen zweiten Echoschätzungssignal.

11. Vorrichtung (100) gemäß einem der vorhergehenden Ansprüche,
wobei die Vorrichtung (100) einen oder mehrere Lautsprecher aufweist, um das eine oder die mehreren Lautsprechersignale auszugeben, und
wobei die Vorrichtung (100) ein oder mehrere Mikrofone aufweist, um das eine oder die mehreren Mikrofonsignale zu erzeugen.

12. Vorrichtung (100) gemäß Anspruch 11,
wobei die Vorrichtung (100) in Abhängigkeit von zumindest einem Raumimpuls zwischen zumindest einem von einem oder mehreren Lautsprechern und zumindest einem von zumindest einem Mikrofon durch Filtern des einen oder der mehreren Referenzsignale unter Verwendung der ersten Filterkonfiguration die erste Echoschätzung zu erzeugen hat, die das eine oder die mehreren ersten Echoschätzungssignale aufweist, wobei der eine oder die mehreren Lautsprecher das eine oder die mehreren Lautsprechersignale auszugeben haben, und wobei das eine oder die mehreren Mikrofone das eine oder die mehreren Mikrofonsignale aufzuzeichnen haben.

13. Vorrichtung (100) gemäß Anspruch 12,
wobei die Vorrichtung (100) zumindest einen akustischen Echopfad zu erhalten hat, durch Messen des zumindest einen akustischen Echopfades zwischen dem zumindest einen von dem einen oder den mehreren Lautsprechern und dem zumindest einen von dem zumindest einen Mikrofon.

14. Verfahren zum Durchführen einer akustischen Echounterdrückung durch Erzeugen eines oder mehrerer Fehlersignale, wobei das Verfahren folgende Schritte aufweist:
Erzeugen einer ersten Echoschätzung, die ein oder mehrere erste Echoschätzungssignale aufweist, durch Filtern eines oder mehrerer Referenzsignale unter Verwendung einer ersten Filterkonfiguration, wobei das eine oder die mehreren Referenzsignale einem oder mehreren Lautsprechersignalen entsprechen oder von dem einen oder den mehreren Lautsprechersignalen abgeleitet sind,
Erzeugen einer zweiten Echoschätzung, die ein oder mehrere zweite Echoschätzungssignale aufweist, durch Filtern des einen oder der mehreren ersten Echoschätzungssignale unter Verwendung einer zweiten Filterkonfiguration; oder Erzeugen der zweiten Echoschätzung, die das eine oder die mehreren zweiten Echoschätzungssignale aufweist, durch Erzeugen eines Zwischensignals aus dem einen oder den mehreren ersten Schätzungssignalen und durch Filtern des Zwischensignals unter Verwendung der zweiten Filterkonfiguration,
Erzeugen des einen oder der mehreren Fehlersignale in Abhängigkeit von einem oder mehreren Mikrofonsignalen und in Abhängigkeit von dem einen oder den mehreren zweiten Echoschätzungssignalen,
Aktualisieren der zweiten Filterkonfiguration in Abhängigkeit von dem einen oder den mehreren Fehlersignalen, und
Ausgeben des einen oder der mehreren Fehlersignale,
**dadurch gekennzeichnet, dass** das Verfahren ferner ein Einführen einer Verzögerung in das eine oder die mehreren Mikrofonsignale aufweist,
und ein Erzeugen des einen oder der mehreren Fehlersignale in Abhängigkeit von dem einen oder den mehreren Mikrofonsignalen durchgeführt wird, nachdem die Verzögerung in das eine oder die mehreren Mikrofonsignale eingeführt wurde, und in Abhängigkeit von dem einen oder den mehreren zweiten Echoschätzungssignalen.

15. Computerprogramm zum Implementieren des Verfahrens gemäß Anspruch 14, wenn dasselbe auf einem Computer oder Signalprozessor ausgeführt wird.

## Revendications

1. Appareil (100) destiné à effectuer une annulation d'écho acoustique en générant un ou plusieurs signaux d'erreur,
dans lequel l'appareil (100) est destiné à générer une première estimation d'écho comprenant un ou plusieurs premiers signaux d'estimation d'écho en filtrant un ou plusieurs signaux de référence à l'aide d'une première configuration de filtre, dans lequel l'un ou plusieurs signaux de référence correspondent à un ou plusieurs signaux de haut-parleur ou sont dérivés de l'un ou des plusieurs signaux de haut-parleur,
dans lequel l'appareil (100) est destiné à générer une deuxième estimation d'écho comprenant un ou plusieurs deuxièmes signaux d'estimation d'écho en filtrant l'un ou les plusieurs premiers signaux d'estimation d'écho à l'aide d'une deuxième configuration de filtre ; ou dans lequel l'appareil (100) est destiné à générer la deuxième estimation d'écho comprenant l'un ou les plusieurs deuxièmes signaux d'estimation d'écho en générant un signal intermédiaire à partir de l'un ou des plusieurs premiers signaux d'estimation, et en filtrant le signal intermédiaire à l'aide de la deuxième configuration de filtre,
dans lequel l'appareil (100) est destiné à générer l'un ou les plusieurs signaux d'erreur en fonction d'un ou de plusieurs signaux de microphone et en fonction de l'un ou des plusieurs deuxièmes signaux d'estimation d'écho,
dans lequel l'appareil (100) est destiné à mettre à jour la deuxième configuration de filtre en fonction de l'un ou des plusieurs signaux d'erreur, et
dans lequel l'appareil (100) est destiné à émettre l'un ou les plusieurs signaux d'erreur,
**caractérisé en ce que** l'appareil (100) est destiné à introduire un retard dans l'un ou les plusieurs signaux de microphone,
et que l'appareil (100) est destiné à générer l'un ou les plusieurs signaux d'erreur en fonction de l'un ou des plusieurs signaux de microphone après introduction du retard par l'appareil (100) dans l'un ou les plusieurs signaux de microphone, et en fonction de l'un ou des plusieurs deuxièmes signaux d'estimation d'écho.

2. Appareil (100) selon la revendication 1,
dans lequel l'appareil (100) est configuré pour ne pas mettre à jour la première configuration de filtre au moment de l'exécution, ou
dans lequel l'appareil (100) est configuré pour également mettre à jour la première configuration de filtre au moment de l'exécution, dans lequel l'appareil (100) est destiné à mettre à jour la deuxième configuration de filtre au moment de l'exécution plus fréquemment que la première configuration de filtre.

3. Appareil (100) selon l'une des revendications précédentes,
dans lequel l'un ou les plusieurs signaux de haut-parleur sont deux ou plusieurs signaux de haut-parleur.

4. Appareil (100) selon l'une des revendications précédentes,
dans lequel l'un ou les plusieurs signaux de microphone sont deux ou plusieurs signaux de microphone,
dans lequel l'appareil (100) est destiné à générer la première estimation d'écho comprenant deux ou plusieurs premiers signaux d'estimation d'écho en tant que l'un ou les plusieurs premiers signaux d'estimation d'écho, en filtrant l'un ou les plusieurs signaux de référence à l'aide de la première configuration de filtre,
dans lequel, pour chacun des deux ou plusieurs signaux de microphone, un des deux ou plusieurs premiers signaux d'estimation d'écho indique une première estimation d'un écho dans ledit un des deux ou plusieurs signaux de microphone.

5. Appareil (100) selon la revendication 4,
dans lequel l'appareil (100) comprend deux ou plusieurs premiers filtres, dans lequel la première configuration de filtre comprend une configuration de filtre individuelle pour chacun des deux ou plusieurs premiers filtres, dans lequel chacun des deux ou plusieurs premiers filtres est destiné à générer un des deux ou plusieurs premiers signaux d'estimation d'écho en filtrant au moins un de l'un ou des plusieurs signaux de référence à l'aide de la configuration de filtre individuelle pour ledit un des deux ou plusieurs premiers filtres ; ou
dans lequel l'appareil (100) comprend un seul et unique premier filtre, dans lequel le seul et unique premier filtre est destiné à générer l'ensemble des deux ou plusieurs premiers signaux d'estimation d'écho en filtrant l'un ou les plusieurs signaux de référence à l'aide de la configuration du premier filtre.

6. Appareil (100) selon la revendication 4,
dans lequel les deux ou plusieurs signaux de microphone sont trois ou plusieurs signaux de microphone, et dans lequel l'appareil (100) comprend deux ou plusieurs premiers filtres calculés pour un sous-ensemble approprié des trois ou plusieurs microphones,
dans lequel les deux ou plusieurs premiers filtres sont destinés à générer l'ensemble des deux ou plusieurs premiers signaux d'estimation d'écho en filtrant l'un ou les plusieurs signaux de référence à l'aide de la première configuration de filtre.

7. Appareil (100) selon l'une des revendications 4 à 6,
dans lequel l'appareil (100) est destiné à générer la deuxième estimation d'écho comprenant deux ou plusieurs deuxièmes signaux d'estimation d'écho en tant que l'un ou les plusieurs deuxièmes signaux d'estimation d'écho, en filtrant l'un ou les plusieurs premiers signaux d'estimation d'écho à l'aide de la deuxième configuration de filtre,
dans lequel, pour chacun des deux ou plusieurs signaux de microphone, un des deux ou plusieurs deuxièmes signaux d'estimation d'écho indique une deuxième estimation de l'écho dans ledit un des deux ou plusieurs signaux de microphone, dans lequel l'appareil (100) est destiné à générer deux ou plusieurs signaux d'erreur en tant que l'un ou les plusieurs signaux d'erreur en fonction des deux ou plusieurs signaux de microphone et en fonction des deux ou plusieurs deuxièmes signaux d'estimation d'écho.

8. Appareil (100) selon la revendication 7,
dans lequel l'appareil (100) comprend deux ou plusieurs deuxièmes filtres, dans lequel la configuration de deuxième filtre comprend une configuration de filtre individuelle pour chacun des deux ou plusieurs deuxièmes filtres,
dans lequel chacun des deux ou plusieurs deuxièmes filtres est destiné à générer un des deux ou plusieurs deuxièmes signaux d'estimation d'écho en filtrant un des deux ou plusieurs premiers signaux d'estimation d'écho à l'aide de la configuration de filtre individuelle pour ledit un des deux ou plusieurs deuxièmes filtres,
dans lequel l'appareil (100) est destiné à générer chacun des deux ou plusieurs signaux d'erreur en utilisant uniquement un des deux ou plusieurs signaux de microphone et en utilisant uniquement celui-là des deux ou plusieurs deuxièmes signaux d'estimation d'écho qui indique la deuxième estimation de l'écho dans ledit un deux ou plusieurs signaux de microphone,
dans lequel l'appareil (100) est destiné à mettre à jour la configuration de filtre individuelle de chaque deuxième filtre des deux ou plusieurs deuxièmes filtres à l'aide du signal d'erreur des deux ou plusieurs signaux d'erreur, qui a été généré à l'aide dudit un des deux ou plusieurs deuxièmes signaux d'estimation d'écho qui ont été générés par ledit deuxième filtre, sans utiliser un autre signal d'erreur parmi les deux ou plusieurs signaux d'erreur.

9. Appareil (100) selon l'une des revendications 4 à 6,
dans lequel l'appareil (100) est destiné à générer un premier signal de formation de faisceau à partir des deux ou plusieurs signaux de microphone,
dans lequel l'appareil (100) est destiné à générer, en tant que signal intermédiaire, un deuxième signal de formation de faisceau à partir des deux ou plusieurs premiers signaux d'estimation d'écho,
dans lequel l'appareil (100) est destiné à générer un seul et unique deuxième signal d'estimation d'écho en tant que la deuxième estimation d'écho en filtrant le deuxième signal de formation de faisceau à l'aide de la deuxième configuration de filtre, de sorte que le deuxième signal d'estimation d'écho indique une estimation d'un écho dans le signal de formation de faisceau,
dans lequel l'appareil (100) est destiné à générer un seul et unique signal d'erreur en tant que l'un ou les plusieurs signaux d'erreur, en fonction du premier signal de formation de faisceau et en fonction du seul et unique deuxième signal d'estimation d'écho,
dans lequel l'appareil (100) est destiné à mettre à jour la deuxième configuration de filtre en fonction du seul et unique signal d'erreur,
dans lequel l'appareil (100) est destiné à émettre un seul et unique signal d'erreur.

10. Appareil (100) selon la revendication 9,
dans lequel l'appareil (100) est destiné à introduire un retard dans le premier signal de formation de faisceau,
dans lequel l'appareil (100) est destiné à générer le seul et unique signal d'erreur en fonction de l'un ou des plusieurs signaux de microphone après introduction du retard par l'appareil (100) dans le premier signal de formation de faisceau, et en fonction du seul et unique deuxième signal d'estimation d'écho.

11. Appareil (100) selon l'une des revendications précédentes,
dans lequel l'appareil (100) comprend un ou plusieurs haut-parleurs destinés à émettre l'un ou les plusieurs signaux de haut-parleur, et
dans lequel l'appareil (100) comprend un ou plusieurs microphones destinés à générer l'un ou les plusieurs signaux de microphone.

12. Appareil (100) selon la revendication 11,
dans lequel l'appareil (100) est destiné à générer la première estimation d'écho comprenant l'un ou les plusieurs premiers signaux d'estimation d'écho en filtrant l'un ou les plusieurs signaux de référence à l'aide de la première configuration de filtre, en fonction d'au moins une réponse impulsionnelle de la pièce entre au moins un d'un ou de plusieurs haut-parleurs et au moins un d'au moins un microphone, dans lequel l'un ou les plusieurs haut-parleurs sont destinés à émettre l'un ou les plusieurs signaux de haut-parleur, et dans lequel l'un ou les plusieurs microphones sont destinés à enregistrer l'un ou les plusieurs signaux de microphone.

13. Appareil (100) selon la revendication 12,
dans lequel l'appareil (100) est destiné à obtenir au moins un trajet d'écho acoustique en mesurant ledit au moins un trajet d'écho acoustique entre ledit au moins un de l'un ou des plusieurs haut-parleurs et ledit au moins un de l'au moins un microphone.

14. Procédé permettant d'effectuer une annulation d'écho acoustique par la génération d'un ou plusieurs signaux d'erreur, dans lequel le procédé comprend :
la génération d'une première estimation d'écho comprenant un ou plusieurs premiers signaux d'estimation d'écho en filtrant un ou plusieurs signaux de référence à l'aide d'une première configuration de filtre, dans lequel l'un ou plusieurs signaux de référence correspondent à un ou plusieurs signaux de haut-parleur ou sont dérivés de l'un ou des plusieurs signaux de haut-parleur,
la génération d'une deuxième estimation d'écho comprenant un ou plusieurs deuxièmes signaux d'estimation d'écho en filtrant l'un ou les plusieurs premiers signaux d'estimation d'écho à l'aide d'une deuxième configuration de filtre ; ou la génération de la deuxième estimation d'écho comprenant l'un ou les plusieurs deuxièmes signaux d'estimation d'écho en générant un signal intermédiaire à partir de l'un ou des plusieurs premiers signaux d'estimation, et en filtrant le signal intermédiaire à l'aide de la deuxième configuration de filtre,
la génération de l'un ou des plusieurs signaux d'erreur en fonction d'un ou de plusieurs signaux de microphone et en fonction de l'un ou des plusieurs deuxièmes signaux d'estimation d'écho, la mise à jour de la deuxième configuration de filtre en fonction de l'un ou des plusieurs signaux d'erreur, et
l'émission d'un ou de plusieurs signaux d'erreur,
**caractérisé en ce que** le procédé comprend en outre l'introduction d'un retard dans l'un ou les plusieurs signaux de microphone,
et que la génération de l'un ou les plusieurs signaux d'erreur est effectuée en fonction de l'un ou des plusieurs signaux de microphone après introduction du retard dans l'un ou les plusieurs signaux de microphone, et en fonction de l'un ou des plusieurs deuxièmes signaux d'estimation d'écho.

15. Programme informatique permettant de mettre en œuvre le procédé selon la revendication 14 lorsqu'il est exécuté sur un ordinateur ou un processeur de signal.
